# EUROPEAN PATENT SPECIFICATION

(11) **EP 0 925 583 B1**
(45) Date of publication and mention of the grant of the patent: **18.06.2003**
(21) Application number: 98901465.9
(22) Date of filing: 16.02.1998
(51) Int. Cl.: G11B 15/67

(54) **RECORDING AND/OR REPRODUCING SYSTEM INCLUDING A MAGNETIC-TAPE CASSETTE COMPRISING A COUPLING ELEMENT**
AUFNAHME- UND/ODER WIEDERGABESYSTEM MIT MAGNETBANDCASSETTE MIT KUPPLUNGSELEMENT
SYSTEME D'ENREGISTREMENT ET/OU DE REPRODUCTION COMPRENANT UNE CASSETTE DE BANDE MAGNETIQUE COMPRENANT UN ELEMENT DE COUPLAGE

(30) Priority: 03.04.1997 EP 97890062
(43) Date of publication of application: 30.06.1999
(73) Proprietor: Koninklijke Philips Electronics N.V., 5621 BA Eindhoven (NL)
(72) Inventor: KLETZL, Franz, NL-5656 AA Eindhoven (NL)
(74) Representative: Weber, Helmut
(86) International application number: IB9800201
(87) International publication number: WO98044499

(56) References cited:
- US-A- 3 306 545
- US-A- 4 335 858
- US-A- 4 828 201
- US-A- 5 374 003

## Description

The invention relates to a recording and reproducing system, comprising a recording and/or reproducing device and a cassette adapted to be inserted into the recording and/or reproducing device, which cassette comprises a rectangular parallelepiped housing having two mutually parallel main walls, in which housing a magnetic tape is accommodated, and in which the cassette accommodates a supply reel for storing the magnetic tape, which supply reel has a reel hub to which the magnetic tape is connected at one end, and further accommodates a coupling element, to which the magnetic tape is connected at its other end and which can be positioned into a coupling position in the cassette with the aid of positioning means, and in which a tape transport path has been defined in the recording and/or reproducing device, which tape transport path extends from a compartment for receiving the inserted cassette, via a magnetic head for scanning the magnetic tape and provided in the recording and/or reproducing device, to a rotationally drivable take-up reel for taking up the magnetic tape and provided in the recording and/or reproducing device, which take-up reel has a reel hub to which a pull-out tape is connected at its end nearest the take-up reel, which pull-out tape can be guided along the tape transport path and is connected to a pull-out element at its other end which is remote from the take-up reel, which pull-out element can be held in a standby position with the aid of holding means provided in the recording and/or reproducing device and, in its standby position, can be coupled to the coupling element of the inserted cassette in the coupling position of said coupling element, in such a manner that the coupling element and the magnetic tape can be pulled out of the inserted cassette in a pull-out direction and can be pulled up to the take-up reel along the tape transport path in that the take-up reel is rotationally driven - by means of the take-up reel, the pull-out tape, the pull-out element and the coupling element of the inserted cassette, which coupling element has been coupled to the pull-out element.

The invention further relates to a recording and/or reproducing device adapted to receive a cassette, which cassette comprises a rectangular parallelepiped housing having two mutually parallel main walls and accommodates a magnetic tape, and in which device a tape transport path for a magnetic tape has been defined, which tape transport path extends from a compartment for receiving an inserted cassette, via a magnetic head for scanning a magnetic tape, to a rotationally drivable take-up reel for taking up a magnetic tape and having a reel hub to which a pull-out tape is connected at its end nearest the take-up reel, which pull-out tape can be guided along the tape transport path, and is connected to a pull-out element at its other end which is remote from the take-up reel, which pull-out element can be held in a standby position with the aid of holding means and is adapted to be coupled to a coupling element of an inserted cassette, so as to pull such a coupling element and a magnetic tape out of an inserted cassette in a pull-out direction and up to the take-up reel along the tape transport path after such coupling in that the take-up reel is rotationally driven - by means of the take-up reel, the pull-out tape, the pull-out element and a coupling element coupled to the pull-out element.

The invention further relates to a cassette, which comprises a rectangular parallelepiped housing having two mutually parallel main walls and which accommodates a magnetic tape, and which comprises a supply reel for storing the magnetic tape, which supply reel has a reel hub to which the magnetic tape is connected at one end, and further comprises a coupling element, to which the magnetic tape is connected at its other end and which can be positioned into a coupling position in the cassette with the aid of positioning means, wherein the coupling element of the cassette comprises coupling means which are adapted to automatically establish, without any additional means being required, a coupling to coupling means of a pull-out element of a recording and/or reproducing device during a relative movement - which occurs between the cassette and a pull-out element of the recording and/or reproducing device in a direction of movement transverse to the main walls of the cassette, at least towards the end of the insertion of the cassette into a recording and/or reproducing device when the cassette inserted in order to put the cassette into operation -, during which. relative movement the coupling element of the cassette is positioned in its coupling position with the aid of the positioning means.

A recording and/or reproducing system of the type defined in the first paragraph and a recording and/or reproducing device of the type defined in the second paragraph are commercially available and are thus known. For the known system and the known device reference can also be made to the two documents EP 0 229 052 B1 and EP 0 228 369 B1. A cassette of the type defined in the third paragraph is known from the document US-A-4.335.858. US-A-4 335 858 discloses a system where a leader block of the tape in the cassette is attached to a pull-out finger during the vertical movement of the cassette when the cassette is inserted in the recorder. The pull-out finger together with the block is moved into the take-up reel by a pull-out tape which runs in a special guide.

In the known system the pull-out element, which is connected to the pull-out tape of the device, is formed by an end portion of the pull-out tape, which has a leading part formed with undercuts and which has a substantially elongate rectangular aperture adapted to cooperate with a separate actuating mechanism accommodated in the known device, this separate actuating mechanism enabling the end portion of the pull-out tape - i.e. the pull-out element of the pull-out tape - to be held in its standby position. Moreover, with respect to the known system it is to be noted that the coupling element of the known cassette is formed by a further pull-out tape which is connected to the magnetic tape and which at the location of its free end has a substantially oval or elliptical aperture adapted to cooperate with the undercut leading part of the end portion of the pull-out tape of the device. In the known system the pull-out element formed by the end portion of the pull-out tape of the device should not only be held in its standby position by means of the separate actuating device but also has the drawback that, after the known cassette has been loaded into the known device of the system, said pull-out element should be moved from the standby position into a coupling position, during which movement the undercut leading part of the end portion of the pull-out tape is moved through the oval aperture in the further pull-out tape of the cassette, after which by means of the actuating device the leading part is held in such a position that, when the take-up reel of the known device is subsequently driven and, as a result of this, the pull-out tape of the device is driven, the undercuts in the leading part of this pull-out tape engage against the boundaries of the oval aperture in the further pull-out tape of the cassette, the undercuts in the leading part of the pull-out tape of the device engaging behind the further pull-out tape of the cassette and thereby providing a coupling between the pull-out tape of the device and the further pull-out tape of the cassette. For the known system, the know device and the known cassette it is therefore necessary that the known device of the known system comprises a separate actuating device for moving the pull-out element formed by the end portion of the pull-out tape from its standby position into its coupling position. Such a separate actuating device represents a substantial expense and also involves the risk that a correct and reliable coupling between the pull-out tape of the device and the further pull-out tape of the cassette is no longer guaranteed after a longer operating time.

It is an object of the invention to preclude the afore-mentioned problems and to improve a recording and/or reproducing system of the type defined in the first paragraph and a recording and/or reproducing device of the type defined in the second paragraph and a cassette of the type defined in the third paragraph, and to realize an improved recording and/or reproducing system and an improved recording and/or reproducing device and an improved cassette in a simple manner and at low cost, which guarantee a simple and reliable coupling between an pull-out element of the device and a coupling element of the cassette.

According to the invention, in order to achieve the above object, a recording and/or reproducing system of the type defined in the first paragraph is characterized in that the recording and/or reproducing device comprises actuating means capable of producing a relative movement - in a direction of movement oriented transversely to the main walls of the cassette - between the cassette and the pull-out element of the recording and/or reproducing device, which pull-out element is held in its standby position with the aid of the holding means, during an insertion process of the cassette, at least towards the end of the insertion process, and the coupling element of the cassette and the pull-out element of the recording and/or reproducing device comprise coupling means which are adapted to automatically establish a coupling, without any additional means being required, during said relative movement in which the coupling element of the cassette is positioned in its coupling position with the aid of the positioning means and the pull-out element of the recording and/or reproducing device is held in its standby position with the aid of the holding means. The measures in accordance with the invention as defined above ensure in a particularly simple and, consequently, cheap manner that for coupling the pull-out element of the device and the coupling element of the cassette no additional means apart from these two elements themselves are required because these two elements are coupled automatically without any additional means towards the end of a loading cycle of a cassette in accordance with the invention into a recording and/or reproducing device in accordance with the invention. This has the advantage that a recording and/or reproducing system in accordance with the invention and a recording and/or reproducing device in accordance with the invention do not require a separate actuating device to move the pull-out element of the device from its standby position into a coupling position because coupling of the pull-out element of the device to the coupling element of the cassette is effected while the pull-out element is in its standby position.

In a recording and/or reproducing system in accordance with the. invention having the characteristic features defined in Claim 1 it has proved to be advantageous if in addition the measures defined in the appendant Claim 2 are taken. Such an embodiment has the advantage of a high reliability and a simple coupling of the pull-out element of the device and the coupling element of the cassette.

In a recording and/or reproducing system in accordance with the invention having the characteristic features defined in the appendant Claim 2 it has proved to be particularly advantageous if it in addition the measures defined in the appendant Claim 3 are taken. As a result of this, it is possible to make the coupling element of the cassette cheaper than the pull-out element of the device, which has the great advantage that the cheaper part is arranged in the cassette which is manufactured in huge quantities, the more expensive part being arranged in recording and/or reproducing devices which are manufactured in smaller quantities than the cassettes.

In a recording and/or reproducing system in accordance with the invention having the characteristic features defined in the appendant Claim 3 it has proved to be very advantageous if in addition the measures defined in the appendant Claim 4 are taken. This ensures both a smooth engagement of the coupling pin of the coupling element of the cassette into the coupling hole in the pull-out element of the device and a reliable retention of the coupling pin in the coupling hole.

In a recording and/or reproducing system in accordance with the invention having the characteristic features defined in Claim 1 it has also proved to be very advantageous if in addition the measures defined in the appendant Claim 5 are taken. This guarantees a simple yet reliable and accurate retention of the pull-out element in its standby position. It is to be noted that the measures as defined in the appendant Claim 5 can also be applied advantageously in recording and/or reproducing systems in accordance with the invention as defined in Claims 2, 3 and 4.

In a recording and/or reproducing system in accordance with the invention having the characteristic features defined in the appendant Claim 5 it has further proved to be very advantageous if in addition the measures defined in the appendant Claim 6 are taken. In this way, it is achieved that the retaining means serve not only for retaining the pull-out element but also for guiding the pull-out element when its movement in the pull-out direction begins.

In a recording and/or reproducing system in accordance with the invention having the characteristic features defined in the appendant Claim 6 it has proved to be advantageous if in addition the measures defined in the appendant Claim 7 are taken. This ensures that the movement of the coupling element in the pull-out direction is not impeded when this movement begins.

In a recording and/or reproducing system in accordance with the invention having the characteristic features defined in the appendant Claim 6 it has also proved to be very advantageous if in addition the measures defined in the appendant Claim 8 are taken. By means of the bounding walls of the two guide slots, which extend transversely to the pull-out direction, it is thus assured in a simple manner that during the return movement of the coupling element into its cassette and the resulting return of the pull-out element into its standby position the pull-out element is only movable into and not beyond its standby position. It is to be noted that the measures as defined in the appendant Claim 8 can also be used advantageously in a recording and/or reproducing system in accordance with the invention as defined in Claim 7.

In a recording and/or reproducing system in accordance with the invention having the characteristic features defined in the appendant Claim 5 it has also proved to be very advantageous if in addition the measures defined in the appendant Claim 9 are taken. Thus, it is assured by simple means that the pull-out element of the recording and/or reproducing device remains in its standby position when no cassette has been inserted. It is to be noted that the measures as defined in the appendant Claim 9 can also be used advantageously in recording and/or reproducing systems in accordance with the invention as defined in Claims 6, 7 and 8.

In a recording and/or reproducing system in accordance with the invention having the characteristic features defined in the appendant Claim 9 it has also proved to be advantageous if in addition the measures defined in the appendant Claim 10 are taken. This has the advantage that a particularly simple and reliable construction is obtained.

In a recording and/or reproducing system in accordance with the invention having the characteristic features defined in the appendant Claim 5 it has also proved to be very advantageous if in addition the measures defined in the appendant Claim 11 are taken. Thus, it is achieved by means of the actuating projection that when a cassette is inserted into a recording and/or reproducing device the coupling element is applied to the positioning means for the coupling element so that, even in the case that the coupling element has been moved slightly out of its coupling position as a result of unfavorable influences exerted on the cassette, it is ensured that the coupling element is moved into its coupling position by means of the actuating projection prior to coupling. It is to be noted that the measures as defined in the appendant Claim 11 can also be used advantageously in recording and/or reproducing systems in accordance with the invention as defined in Claims 6, 7 8, 9 and 10.

In a recording and/or reproducing system in accordance with the invention having the characteristic features defined in the Claim 1 it has also proved to be very advantageous if in addition the measures defined in the appendant Claim 12 are taken. Thus, it is achieved that when the assembly comprising the pull-out element and the coupling element is connected to the take-up reel of the recording and/or reproducing device the circumferential surface of the reel hub of the take-up reel has a substantially undisturbed cylindrical shape, which precludes undesirable influences on the magnetic tape wound on the reel hub of the take-up reel. It is to be noted that the measures as defined in the appendant Claim 12 can also be used advantageously in recording and/or reproducing systems in accordance with the invention as defined in Claims 2 to 11.

In a recording and/or reproducing system in accordance with the invention having the characteristic features defined in the appendant Claim 12 it has also proved to be very advantageous if in addition the measures defined in the appendant Claim 13 are taken. This ensures a very accurate positioning of the assembly comprising the pull-out element and the coupling element at the location of the reel hub of the take-up reel.

According to the invention, in order to achieve the object mentioned hereinbefore, a recording and/or reproducing device of the type defined in the second paragraph is characterized in that actuating means have been provided which are capable of producing a relative movement - in a direction of movement oriented transversely to the main walls of a cassette - between a cassette and the pull-out element of the recording and/or reproducing device, which pull-out element is held in its standby position with the aid of the holding means, during an insertion process of the cassette, at least towards the end of the insertion process, and the pull-out element of the recording and/or reproducing device comprises coupling means which are adapted to automatically establish a coupling, without any additional means being required, during said relative movement in which the pull-out element is held in its standby position with the aid of the holding means. Such a recording and/or reproducing device in accordance with the invention has advantages corresponding to those set forth hereinbefore for a recording and/or reproducing system in accordance with the invention as defined in Claim 1.

As regards the advantageous variants, defined in Claims 15 to 24, of a recording and/or reproducing device in accordance with the invention having the characteristic features defined in Claim 5, it is only mentioned briefly that these variants have advantages corresponding to those set forth hereinbefore for the variants of a recording and/or reproducing device in accordance with the invention as defined in Claims 2 to 13.

According to the invention, in order to achieve the object mentioned hereinbefore, a cassette of the type defined in the third paragraph is characterized in that the coupling means of the coupling element of the cassette are formed by a coupling pin which projects from the coupling element transversely to the mains walls of the cassette and which is engageable in a coupling hole in such a pull-out element of a recording and/or reproducing device. Such a cassette in accordance with the invention has advantages corresponding to those set forth hereinbefore for a recording and/or reproducing system in accordance with the invention as defined in Claim 3.

As regards the advantages of the advantageous variants, defined in the appendant Claims 26 and 27, of a cassette in accordance with the invention having the characteristic features defined in Claim 25, reference is made to the advantages set forth hereinbefore for the variants of a recording and/or reproducing system in accordance with the invention as defined in Claims 4 and 7.

The above-mentioned as well as further aspects of the invention will become apparent from the embodiment described hereinafter by way of example and will be elucidated by means of this embodiment.

The invention will now be described in more detail with reference to the drawings, which show an embodiment to which the invention is not limited.

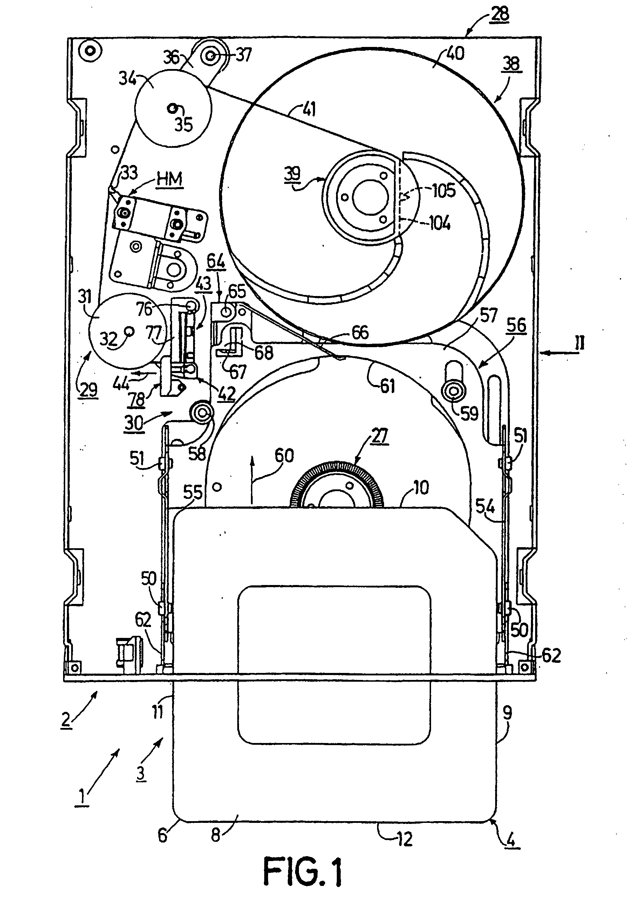

Figure 1 is a plan view of a recording and reproducing system embodying the invention and comprising a recording and reproducing device and a cassette which can be loaded into this device, the recording and reproducing device having actuating means, namely a movable cassette holder for holding the cassette, but this cassette holder is not shown in Figure 1. In Figure 1 the cassette is shown in a position in which it has been introduced only partly into the cassette holder, not shown.

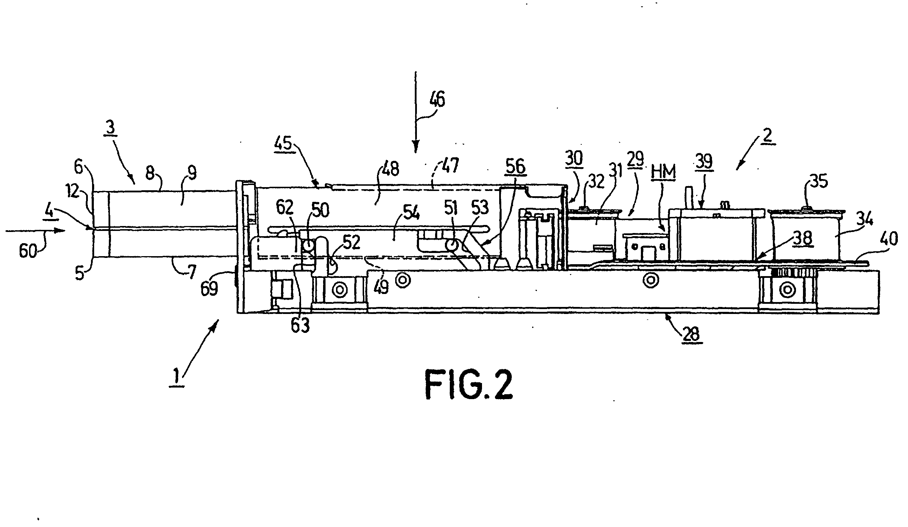

Figure 2 is a side view taken as indicated by an arrow II in Figure 1 and showing the recording and reproducing system of Figure 1, Figure 2 showing the movable cassette holder and showing the cassette, similarly to Figure 1, in a position in which it has been introduced only partly into the movable cassette holder.

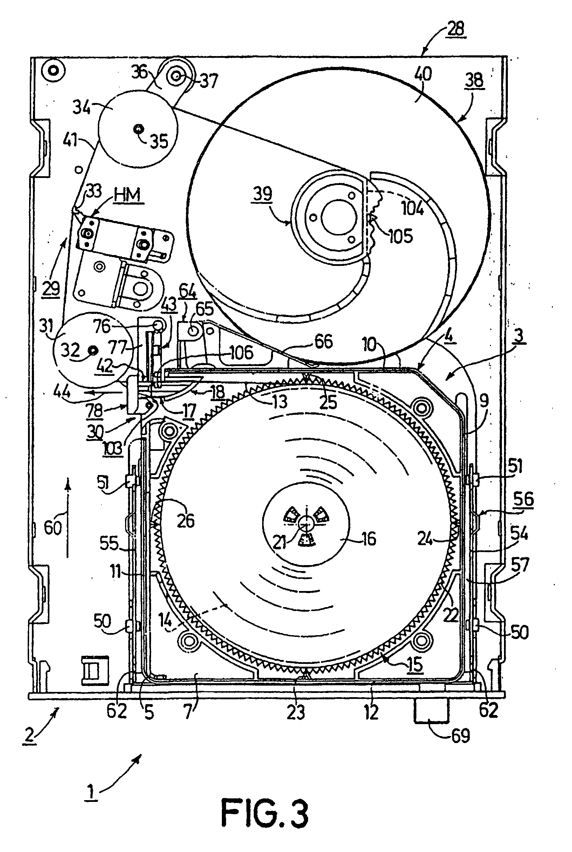

Figure 3, similarly to Figure 1, shows the recording and reproducing system of Figures 1 and 2, the cassette having been inserted completely into the recording and reproducing device and being in an operating position in which a coupling element accommodated in the cassette has been coupled to an pull-out element of the recording and reproducing device and these two elements are situated at the location of the cassette.

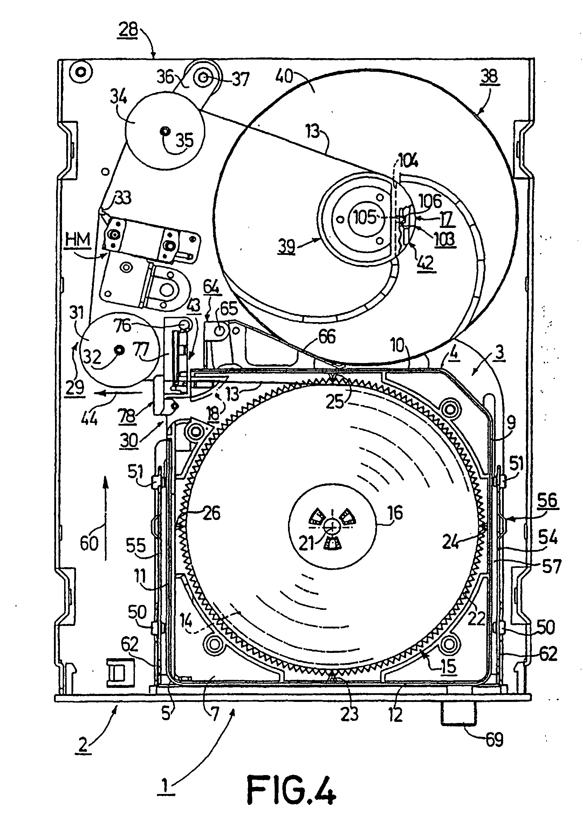

Figure 4, similarly to Figure 3, shows the recording and reproducing system of Figures 1, 2 and 3, the coupling element and the pull-out element being situated in a recess in the reel hub of a take-up reel of the recording and reproducing device, which recess has the shape of a segment of a circle.

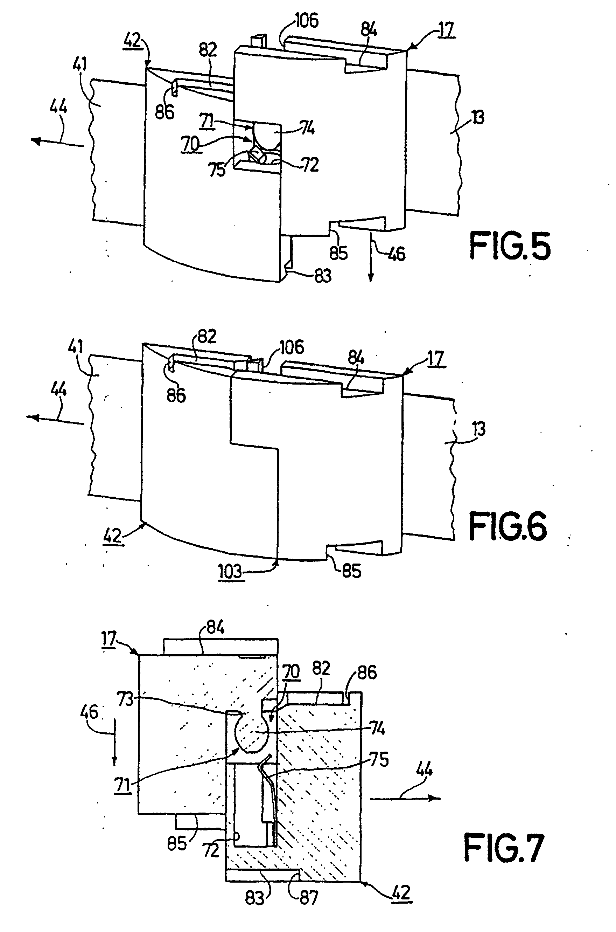

Figure 5 is an oblique view of the pull-out element of the recording and reproducing device and the coupling element of the cassette when these two elements have not yet been coupled to one another.
Figure 6, similarly to Figure 5, shows the pull-out element and the coupling element when these two elements have been coupled to one another.
Figure 7 shows the pull-out element and the coupling element in a sectional view from which the construction of the coupling means of these two elements is apparent.

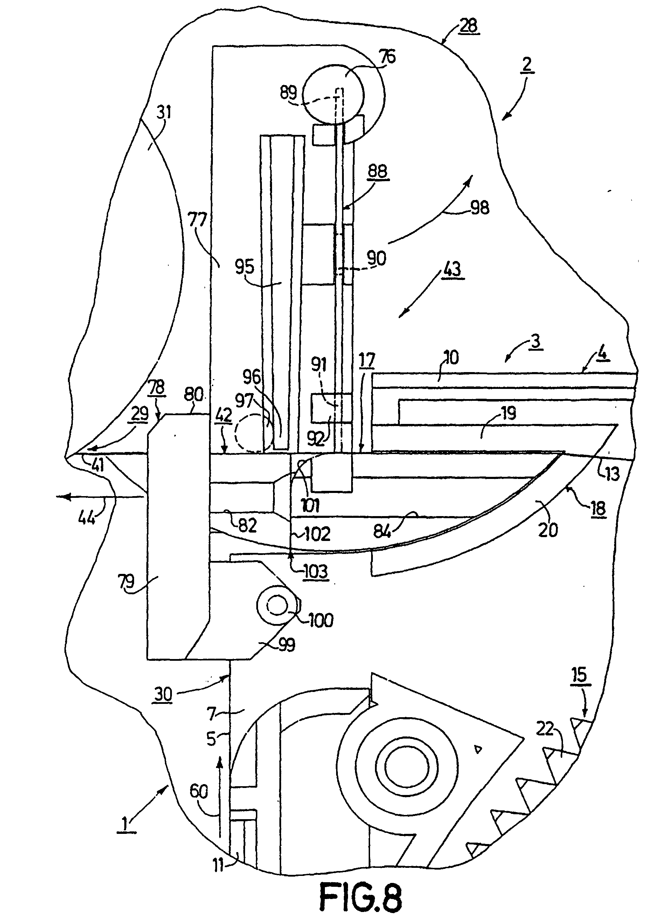

Figure 8 shows a part of the recording and reproducing device and the cassette of the recording and reproducing system of Figures 1 to 4 in a plan view to an enlarged scale in comparison with Figure 3, which part essentially concerns holding means for holding the pull-out element in a standby position in which the pull-out element is engageable with the coupling element of the cassette.

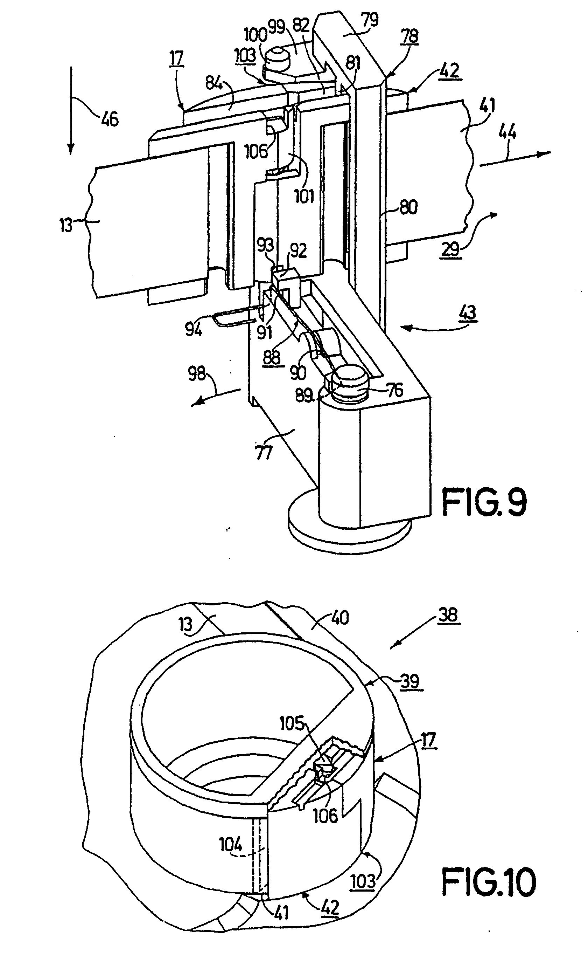

Figure 9 is an oblique view of the holding means for holding the pull-out element in its standby position, which means have already been shown in an enlarged-scale plan view in Figure 8.
Figure 10 is an oblique view of the reel hub of the take-up reel of the recording and reproducing device of the recording and reproducing system shown in Figures 1 to 4, the pull-out element and the coupling element coupled to the pull-out element having engaged the segment-shaped recess in the reel hub.

Figures 1 to 4 show a recording and reproducing system 1, hereinafter briefly referred to as the system 1. The system 1 comprises a recording and reproducing device 2, hereinafter briefly referred to as the device 2, and a cassette 3, which can be loaded into the device 2.

The cassette 3 has a rectangular parallelepided housing 4, which - as is visible in Figure 2 - comprises a tray-shaped lower housing section and a likewise tray-shaped upper housing section 6. In Figures 3, 4 and 8 the cassette 3 is shown with the upper housing section 6 removed to expose the parts accommodated in the cassette 3. The housing 4 of the cassette 3 has two main walls 7 and 8 parallel to one another, i.e. a bottom wall 7 and an upper wall 8, as well as four side walls 9, 10, 11 and 12, which interconnect the two mains walls 7 and 8.

The cassette 3 accommodates a magnetic tape 13. To store the magnetic tape 13 as a tape spool 14 the cassette 3 comprises a supply reel 15. The supply reel 15 has a reel hub 16 to which the magnetic tape 13 is connected at one end in a manner, not shown.

The cassette 3 further accommodates a coupling element 17, whose construction will be described in detail hereinafter. The magnetic tape 13 is connected to the coupling element 17 at its other end. With the aid of positioning means 18 the coupling element 17 can be positioned in a coupling position, which corresponds to the position of the coupling element 17 as shown in plan view in Figures 3 and 8. The positioning means 18 comprise two positioning walls 19 and 20, which project from the bottom wall 7 of the cassette 3, the wall 19 being straight and the positioning wall 20 being shaped as an arc of circle, which positioning walls together form a wedge-like configuration adapted to the cross-sectional shape of the coupling element 17. The positioning means 18 have positioning walls corresponding in shape to the positioning walls 19 and 20 and projecting from the upper wall 8 of the cassette 3.

In the cassette 3 the supply reel 15 is movable parallel to the orientation of its reel axis 21 from a rest position, in which the supply reel 15 lies on the bottom wall 9, into a drive position, in which the supply reel 15 has been lifted off the bottom wall 9. In the rest position teeth 22, which project radially from the lower reel flange of the supply reel 15, mesh with latching teeth 23, 24, 25 and 26 provided in the lower housing section 5, thus inhibiting a rotation of the supply reel. In the drive position of the supply reel 15 the supply reel 15 is rotationally drivable about the reel axis 21. The supply reel 15 is lifted off the bottom wall 9 of the cassette 3 by means of a reel drive device 27 provided in the device 2 and shown in Figure 1. The reel drive device 27 is mounted on a substantially plate-shaped chassis 28 of the device 2 and can be brought into operational engagement with the reel hub 16 of the supply reel 15 through an aperture, not shown, in the bottom wall 9 of the cassette 3.

In the device 2 of the system 1 a tape transport path 29 has been defined for the magnetic tape 13. The tape transport path 29 extends from a compartment 30 for receiving the inserted cassette 3 to a take-up reel 38, which is rotationally drivable by means of a reel drive motor, which is secured to the chassis 28 and is not shown in the Figures, via a tape guide roller 31, which is mounted on the chassis 38 so as to be rotatable about a spindle 32, via a magnetic head 33 provided in the device 2 to scan the magnetic tape 13, and via a further tape guide roller 34, which is mounted for rotation about a spindle 35, the spindle 35 being carried by a lever 36, which is supported on the chassis 28 so as to be pivotable about a spindle 37. As regards the magnetic head 33, it is to be noted that this magnetic head 33 is a so-called multi-track magnetic head by means of which a plurality of tracks which adjoin one another on the magnetic tape 13 in the longitudinal direction of the magnetic tape 13 and which, in addition, is adjustable in height by means of an actuating device HM transversely to the longitudinal direction of the magnetic tape 13, but which will not be described in any further detail because it is not relevant in the present case.

The take-up reel 38 has a reel hub 39 from which a reel flange 40 extends in radial directions at its side which faces the chassis 28. In a manner not shown, an pull-out tape 41 is connected to the reel hub 39 of the take-up reel 38 at its end nearest the take-up reel 38. The pull-out tape 41 can be guided along the tape transport path 29 described above, as is apparent from Figures 1 and 3. At its other end which is remote from the take-up reel 38 the pull-out tape 41 is connected to an pull-out element 42 in a manner not shown. The pull-out element 42 can be held in a standby position shown in Figures 1, 3, 8 and 9 with the aid of holding means 43 provided in the device 2. In its standby position the pull-out element 42 can be coupled to the coupling element 17 of the inserted cassette 3 when this coupling element is in its coupling position. In this way, it is achieved that by rotationally driving the take-up reel 38 - which is effected by means of the reel drive motor not shown - the coupling element 17 and, consequently, the magnetic tape 13 can be pulled out of the inserted cassette 3 in an pull-out direction indicated by an arrow 44 in Figures 1, 3, 4, 5, 6, 7, 8 and 9 and can be pulled along the tape transport path 29 up to the take-up reel 38 with the aid of the take-up reel 38, the pull-out tape 41, the pull-out element 42 and the coupling element 17 of the inserted cassette 3, when coupled to the pull-out element 42.

Advantageously, the device 2 in the system 1 comprises a movable cassette holder 45, whose construction is apparent from Figure 2. The movable cassette holder 45 constitutes actuating means capable of producing a relative movement - in a direction of movement indicated by an arrow 46 in Figure 2 and oriented transversely to the main walls 7 and 8 of the cassette 3 - between the cassette 3 and the pull-out element 42 of the device 2, which element is held in its standby position with the aid of the holding means 43, during an insertion process of the cassette 3, at least towards the end of the insertion process. In the present case this relative movement is effected by lowering the cassette 3 towards the chassis 28 of the device 2 in a direction indicated by an arrow 46.

As is apparent from Figure 2, the movable cassette holder 45 comprises an upper wall 47, two side walls 48, which project from the upper wall 47 towards the chassis 28, and two strip-shaped bottom wall sections 49, which each project from a side wall 48 and are directed towards the other side wall 48. The two bottom wall sections 49 carry a cassette 3 inserted into the cassette holder 45, a spring not shown in Figure 2 and connected to the upper wall 47 urging the inserted cassette 3 against the bottom wall sections 49 in order to guarantee a reliable positioning and holding of the cassette 3 in the cassette

Two actuating rollers 50 and 51 project laterally from each of the side walls 48 of the movable cassette holder 45. The actuating rollers 50 and 51 engage inclined actuating slots 52 and 53 formed in the two side flanges 54 and 55 of an essentially U-shaped actuating slide 56 whose web 57, which extends parallel to the chassis 28, is guided so as to he movable parallel to the direction of insertion of the cassette 3 into the cassette holder 45, as indicated by an arrow 60 in Figures 1 and 2, with the aid of guide rollers which are rotatably supported in the chassis 28 and of which the two guide rollers 58 and 59 are visible in Figure 1. The web 57 has an aperture 61 to allow the passage of the reel drive device 27. The actuating rollers 50, which both project laterally from the two side walls 48 of the cassette holder 45 and which are situated nearer the loading aperture of the device 2 for the passage of the cassette 3, each engage a guide slot 63 formed in a side wall portion 62 of the chassis 28. The two guide slots 63, of which only one guide slot 63 is visible in Figure 2, guide the cassette holder 45 so as to be slidable in a direction parallel to that indicated by the arrow 46.

The actuating slide 56 cooperates with a latching lever 64, which is supported on the chassis 28 so as to be pivotable about a spindle 65. The latching lever 64 is movable between a latching position shown in Figure 1 and a release position shown in Figures 3 and 4. A first return spring, not shown, acts on the latching lever 64 and tends to keep the latching lever 64 in its latching position. The latching lever 64 has a resilient arm 66 which projects into the path of movement of the cassette 3 during insertion of this cassette into the movable cassette holder 45. The latching lever 64 further comprises a latching projection 67, which faces a latching stop 68 of the actuating slide 56. A second return spring, not shown in the Figures, acts upon the actuating slide 56 and exerts a spring-load on the actuating slide 56 against the direction of insertion, so that the latching stop 68 of the actuating slide 56 is resiliently urged against the latching projection 67 of the latching lever 64 when the latching lever 64 is in its latching position shown in Figure 1.

When a cassette 3 is inserted into the cassette holder 45 in the direction indicated by the arrow 60 as shown in Figure 1, the cassette 3 abuts against the resilient arm 66 of the latching lever 64 towards the end of this insertion process, thereby causing the latching lever 64 to be pivoted counter-clockwise as shown in Figure 1, so that the latching projection 67 is disengaged from the latching stop 68 of the actuating slide 56, as a result of which the actuating slide 56 is moved in a direction opposite to that indicated by the arrow 60 under the influence of the second return spring which acts upon this slide, namely into the position shown in Figures 3 and 4, in which an actuating projection 69 on the actuating slide 56 projects from the device 2. During this movement of the actuating slide 56 in a direction opposite to that indicated by the arrow 60 the actuating slots 52 and 53 cause the actuating rollers 50 and 51 to be lowered in the direction indicated by the arrow 46 and, as a consequence, the cassette holder 45 and the cassette 3 in this holder are moved in the direction indicated by the arrow 46. As a result of this, the reel drive device 27 engages with the supply reel 15 in the cassette 3, the supply reel 15 being lifted into its drive position, in which the supply reel 15 no longer lies on the bottom wall 7 of the cassette 3 and, consequently, is no longer locked against rotation by the latching teeth 23, 24, 25 and 26 and can thus be set into rotation.

In order to allow an inserted cassette 3 to be removed from the device 2 of the system 1 a user should move the actuating projection 69 of the actuating slide 56 in the direction indicated by the arrow 60, the actuating slide 56 then being moved in the direction indicated by the arrow 60 opposed by the force of the second return spring which acts upon this slide and the cassette holder 45 being moved away from the chassis 28 via the actuating slots 52 and 53 and the actuating rollers 50 and 51 in a direction opposite to that indicated by the arrow 46. As soon as the actuating slide 56 has moved far enough in the direction indicated by the arrow 60, the latching lever 64 is pivoted back into its latched position shown in Figure 1 in the clockwise direction under the influence of the first return spring which acts upon this lever, in which latched position the latching projection 67 of the lever blocks the actuating slide 56 via the latching stop 68 of the actuating slide 56. During this clockwise pivotal movement of the latching lever 64 the resilient arm 66 of the latching lever 64 causes the cassette 3 to be moved slightly out of the cassette holder 45, i.e. out of the device 2, so that the cassette 3 can readily be removed.

By means of the movable cassette holder 45 described above it is possible - as already stated in the foregoing - to obtain the relative movement between the cassette 3 and the chassis 28, which movement is oriented in a direction transverse to the mains walls 7 and 8 of the cassette 3 as indicated by the arrow 46, and consequently between the coupling element 17, which is positioned in its coupling position in the cassette 3 with the aid of the positioning means 18, and the pull-out element 42, which is held in its standby position with the aid of the holding means 43. In the system 1 as shown in Figures 1 to 4 the coupling element 17 of the cassette 3 and the pull-out element 42 of the device 2 advantageously also comprise coupling means 70 which are adapted to automatically establish a coupling, without additional means being required, during said relative movement in which the coupling element 17 of the cassette 3 is positioned in its coupling position with the aid of the positioning means 18 and the pull-out element 42 of the device 2 is held in its standby position with the aid of the holding means 43. For the coupling means 70 reference is made, in particular, to Figures 5 and 7.

In Figure 5 the pull-out element 42 is shown in its standby position and the coupling element 17 is shown in its coupling position. As a result of the movement of the coupling element 17 when the cassette holder 45 is lowered towards the chassis 28 as indicated by the arrow 46 the coupling means 70 of the pull-out element 42 and of the coupling element 17 are automatically coupled, which condition is shown in Figure 6.

As is apparent particularly from Figure 7, the coupling means 70 of the coupling element 17 and of the pull-out element 42 are formed by a coupling pin 71, which is connected to the coupling element 17 and which projects from the coupling element 17 parallel to said direction of movement indicated by the arrow 46 and, consequently, transversely to the mains walls 7 and 8 of the cassette 3, and by a coupling hole 72, which is formed in the pull-out element 42 and which extends parallel to said direction of movement indicated by the arrow 46 and, consequently, transversely to the mains walls 7 and 8 of the cassette 3. During said relative movement between the pull-out element 42 and the coupling element 17 and between the cassette 3 and the device 2 the coupling pin 71 can be introduced into the coupling hole 72 as indicated by the arrow 46. As is further apparent from Figure 7, the coupling pin 71 has a distal portion 74 which is thicker than its proximal portion 73 which adjoins the coupling element 17. In the coupling hole 72 of the pull-out element 42 a spring-loaded latching element 75 is disposed, which in the present case is very simply formed by a blade spring having a V-shaped free end portion and which engages behind the distal portion 74 of the coupling pin 71 when the coupling pin 71 is introduced into the coupling hole 72, which situation is not shown in the Figures but is quite evident.

To ensure that the pull-out element 42 is always reliably and correctly coupled to the coupling element 17 it is important that the pull-out element 42 is always accurately and correctly held in its standby position and the coupling element is always accurately and correctly positioned in its coupling position in the cassette 3.In view of this, the construction and operation of the holding means 43 for holding the pull-out element 42 in its standby position is described in more detail hereinafter, particularly with reference to Figures 8 and 9.

The holding means 43 provided for the pull-out element 43 in the device 2 comprise a carrier lever 77 which is pivotable about a pivot 76. The pivot 76 extends parallel to the direction of said relative movement indicated by the arrow 46 and is mounted in the chassis 28, from which it projects in the afore-mentioned direction. The carrier lever 77 is connected to a substantially U-shaped holding element 78, which comprises two holding limbs 79, which extend transversely to the pivot 76 and of which only the upper holding limb 79 is visible in Figures 8 and 9, and a connecting limb 80, which interconnects the two holding limbs 79 and which extends parallel to the pivot 76. By means of the two holding limbs 79 the pull-out element 42 can be held in its standby position shown in Figures 8 and 9. Each of the two holding limbs 79 carries a guide rib 81 which projects towards the other holding limb 79 and of which only the upper guide rib 81 is visible in Figure 9. The longitudinal directions of the two guide ribs 81 correspond to the pull-out direction 44. The pull-out element 42 has two guide grooves 82 and 83 adapted to cooperate with the two guide ribs 81 for the purpose of guiding and holding the pull-out element 42.

The coupling element 17 has two clearance grooves 84 and 85, which correspond to the two guide grooves 82 and 83 of the pull-out element 42 and which - as soon as the coupling element 17 and the pull-out element 42 are coupled as shown in Figure 6 - are disposed in line with the guide grooves 82 and 83 of the pull-out element 41 parallel to the pull-out direction 44. This guarantees that the coupling element 17 is withdrawn from the cassette 3 in a reliable manner and without being obstructed by the guide ribs 81.

As is apparent from the Figures 5, 6 and 7, the two guide grooves 82 and 83 of the pull-out element 42 are each bounded by a bounding wall 86 or 87, respectively, at their ends nearer the pull-out tape 41, which bounding walls extend transversely to the pull-out direction 44. By means of the two bounding walls 86 and 87 the travel of the pull-out element 42 in a direction opposite to the pull-out direction 44 can be limited because the two bounding walls 86 and 87 abut against the guide ribs 81 during a movement of the pull out element 42 in a direction opposite to the pull-out direction 44.

With respect to the holding means 43 it is to be noted that a movable latching element 88 is connected to the carrier lever 77 of the holding means 43. In the present case the latching element 88 of the holding means 43 is formed by a wire spring having an offset portion. The wire spring forming the latching element 88 has one end 89 inserted into a recess in the pivot 76 and its central portion is passed over a projection 90 on the carrier lever 77, so that the wire spring is pre-tensioned, thereby causing a further portion 91 of the wire spring to abut against an L-shaped hold-down member 92 in the absence of a cassette 3, the wire spring constituting the latching element 88 then assuming a latching position. The wire spring constituting the latching element 88 is movable from this latching position into a release position, shown in Figure 9, by means of the cassette 3 during said relative movement in the direction indicated by the arrow 46.

The pull-out element 42 comprises latching means 93 adapted to cooperate with the latching element 88 of the holding means 43. In the present case the latching means 93 of the pull-out element 42 are constituted by a recess formed in the pull-out element.

When the latching element 88 is in its latching position, which is not directly discernible in the Figures, the pull-out element 42, when in its standby position, is locked against a movement in the pull-out direction 88 with the aid of the latching element 88 of the holding means 43 and the latching means 93 of the pull-out element 42. The latching element 88 is moved from its latching position into its release position shown in Figure 9 by means of the cassette 4 via its substantially U-shaped free end 94, only when a cassette 3 has been loaded into the device 2, in which case the relevant portion of the latching element 88 is moved out of the recess forming the latching means 93 of the pull-out element 42, thus enabling the pull-out element 42 to be moved in the pull-out direction 44.

The plastic carrier lever 77 comprises an integral bar spring 95 whose free end 96 abuts against a stop pin 97 which projects from the chassis 31. The bar spring 95 can resiliently load the carrier lever 77 and, consequently, the U-shaped holding element 78, which is integral with the carrier lever 77, in the direction indicated by an arrow 98 in Figure 8. By means of this resilient load provided by the bar spring 95 the carrier lever 77 and the holding means 43 can be held in the holding position shown in Figure 8 with the aid of means not shown. In this holding position of the holding means 43 the pull-out element 42 is in its standby position.

Another advantageous feature of the holding means 43 is that the holding limb 79 of the U-shaped holding element 78 carries an actuating projection 99, which projects from the holding limb 79 substantially in a direction opposite to the pull-out direction 44 and from which a substantially circularly cylindrical actuating pin 100 projects. By means of the actuating projection 99, i.e. by means of the actuating pin 100 which projects from this actuating projection 99, the coupling element 17 disposed in the inserted cassette 3 can be moved to the positioning means 18 for the coupling element 17. This movement of the coupling element 17 to the positioning means 18 is performed during insertion of the cassette 3 into the movable cassette holder 45, namely towards the end of this insertion process. This is achieved in that towards the end of the insertion process a rounded wall portion 101 of the coupling element 17 strikes against the actuating pin 100, after which the actuating pin 100 is moved in the pull-out direction 44 by the coupling element 17, so that subsequently the actuating pin 100 slides over the wall portion 102 of the coupling element 17, which wall portion extends perpendicularly to the pull-out direction 44. By means of the actuating pin 100 the actuating projection 99 and, consequently, the U-shaped holding element 78 as well as the carrier lever 77 are moved in a direction opposite to the direction indicated by the arrow 98 and opposed by the force of the bar spring 95 out of the standby position into a press-on position, not shown in Figure 8, in which the bar spring 95, whose free end 96 acts upon the stop pin 97, exerts a spring force on the actuating pin 100 via the carrier lever 77, the U-shaped holding element 78 and the actuating projection 99, which spring force is transmitted to the coupling element 17 via the wall portion 102 so that the coupling element 17 is urged into the positioning means 18 by spring force and is thus positioned properly into its coupling position before the coupling element 17 is moved towards the pull-out element 42 in the direction indicated by the arrow 46 and before the coupling means 70 of the coupling element 17 and of the pull-out element 42 engage with one another to effect coupling.

Since the coupling element 17 is accurately positioned into its coupling position in the cassette 3 in the manner described hereinbefore and the pull-out element 42 is also accurately held in its standby position in the device 2 a reliable and correct coupling of the coupling means 70 and, consequently, of the pull-out element 42 and the coupling element 17 is achieved during the relative movement in the direction indicated by the arrow 46.

With respect to the system 1 it is to be noted also that - as is apparent particularly from Figures 3, 4, 6, 8, 9 and 10 - the coupling element 17 and the pull-out element 42 - once these two elements 17 and 42 have been coupled - form an assembly of circularly segment-shaped cross-section. This assembly 103 is engageable in a recess 104 of corresponding segment shape formed in the reel hub 39 of the take-up reel 38 of the device 2, as is apparent from Figure 4 and particularly from Figure 10.

As is further apparent from Figure 10, a positioning wedge 105, which engages the recess 104 in the reel hub 39, is attached to the reel hub 39. Either the coupling element 17 or the pull-out element 42, in the present case the coupling element 17, has a positioning recess 106, as is apparent in particular from Figure 9, in which recess the positioning wedge 105 has been inserted - while the assembly 103 is situated in the recess 104 of the reel hub 39 of the take-up reel 38 - in order to position the assembly 103 on the reel hub 39 of the take-up reel 38. By means of the positioning wedge 105 and the positioning recess 106 a very exact positioning of the assembly 103 on the reel hub 39 is guaranteed.

Furthermore, it is to be noted that a few layers of pull-out tape are present in the substantially plane separating zone between the reel hub 39 of the take-up reel 38 and the assembly 103 comprising the pull-out element 42 and the coupling element 17 when the assembly 103 is disposed in the reel hub 39.

With a recording and reproducing system 1 in accordance with the invention it is achieved in a particularly simple and, consequently, very cheap manner that for coupling the pull-out element 42 arranged in the device 2 and the coupling element 17 arranged in the cassette 3 no additional means are required apart from these two elements 17 and 42 themselves because coupling of these two elements 17 and 42 is effected automatically, without any additional means being required, towards the end of an insertion process of a cassette into the device 2.

The invention is not limited to the embodiment described by way of example in the foregoing. For example, it is alternatively possible to use differently constructed coupling means between a coupling element of a cassette and a pull-out element of a device. Moreover, a variety of differently constructed means are available for the implementation of the positioning means for the coupling element of a cassette as well as for the implementation of the holding means for holding the pull-out element of a device.

## Claims

1. A recording and reproducing system (1), comprising a recording and/or reproducing device (2) and a cassette (3) adapted to be inserted into the recording and/or reproducing device, which cassette (3) comprises a rectangular parallelepiped housing (4) having two mutually parallel main walls (7, 8) and which accommodates a magnetic tape, (13) and in which the cassette (3) comprises a supply reel (15) for storing the magnetic tape (13), which supply reel (15) has a reel hub (16) to which the magnetic tape (13) is connected at one end, and further comprises a coupling element (17), to which the magnetic tape (13) is connected at its other end and which can be positioned into a coupling position in the cassette (3) with the aid of positioning means (18), and in which a tape transport path (29) has been defined in the recording and/or reproducing device (2), which tape transport path (29) extends from a compartment (30) for receiving the inserted cassette (3), via a magnetic head (33) for scanning the magnetic tape (13) and provided in the recording and/or reproducing device (2), to a rotationally drivable take-up reel (38) for taking up the magnetic tape (13) and provided in the recording and/or reproducing device (2), which take-up reel (38) has a reel hub (39) to which a pull-out tape (41) is connected at its end nearest the take-up reel (38), which pull-out tape (41) can be guided along the tape transport path (29) and is connected to a pull-out element (42) at its other end which is remote from the take-up reel (38), which pull-out element (42) can be held in a standby position with the aid of holding means (43) provided in the recording and/or reproducing device (2) and, in its standby position, can be coupled to the coupling element (17) of the inserted cassette (3) in the coupling position of said coupling element (17), in such a manner that the coupling element (17) and the magnetic tape (13) can be pulled out of the inserted cassette (3) in a pull-out direction (44) and can be pulled up to the take-up reel (38) along the tape transport path (29) in that the take-up reel (38) is rotationally driven - by means of the take-up reel (38), the pull-out tape (41), the pull-out element (42) and the coupling element (17) of the inserted cassette (3), which coupling element (17) has been coupled to the pull-out element (42), **characterized in that** the recording and/or reproducing device (2) comprises actuating means (45) capable of producing a relative movement - in a direction (46) of movement, oriented transversely to the main walls (7, 8) of the cassette (3) - between the cassette (3) and the pull-out element (42) of the recording and/or reproducing device (2), which pull-out element (42) is held in its standby position with the aid of the holding means (43), during an insertion process of the cassette (3), at least towards the end of the insertion process, and the coupling element (17) of the cassette (3) and the pull-out element (42) of the recording and/or reproducing device (2) comprise coupling means (70) which are adapted to automatically establish a coupling, without any additional means being required, during said relative movement in which the coupling element (17) of the cassette (3) is positioned in its coupling position with the aid of the positioning means (18) and the pull-out element (42) of the recording and/or reproducing device (2) is held in its standby position with the aid of the holding means (43).

2. A recording and/or reproducing system (1) as claimed in Claim 1,
**characterized in that** the coupling means (70) of the coupling element (17) and of the pull-out element (42) are formed by a coupling pin (71), which is connected to one element (17) of said two elements (17, 42) and which projects from this element (17) parallel to said direction (46) of movement and, consequently, transversely to the mains walls (7,8) of the cassette (3), and by a coupling hole (72), which is formed in the other one element (42) of said two elements (17,42) and extends parallel to said direction of movement (46) and, consequently, transversely to the mains walls (7,8) of the cassette (3), the coupling pin (71) being engageable in the coupling hole (72) during said relative movement.

3. A recording and/or reproducing system (1) as claimed in Claim 2,
**characterized in that** the coupling pin (71) is connected to the coupling element (17) of the cassette (3) and the coupling hole (72) is formed in the pull-out element (42) of the recording and/or reproducing device (2).

4. A recording and/or reproducing system (1) as claimed in Claim 3,
**characterized in that** the coupling pin (71) has a distal portion (73) thicker than its proximal portion (74) which adjoins the coupling element (17), and in the coupling hole (72) of the pull-out element (42) a spring-loaded latching element (75) is disposed, which engages behind the distal portion (74) of the coupling pin (71) - when the coupling pin (71) has engaged the coupling hole (72).

5. A recording and/or reproducing system (1) as claimed in Claim 1,
**characterized in that** the holding means (43) provided for the pull-out element (42) in the recording and/or reproducing device (2) comprise a carrier lever (77) which is pivotable about a pivot (76) which extends parallel to the direction (46) of said relative movement, which carrier lever (77) is connected to a substantially U-shaped holing element (78), which comprises two holding limbs (79), which extend transversely to the pivot (76), and a connecting limb (80), which interconnects the two holding limbs (79) and which extends parallel to the pivot (76), and by means of the two holding limbs (79) the pull-out element (42) can be held in its standby position.

6. A recording and/or reproducing system (1) as claimed in Claim 5,
**characterized in that** each of the two holding limbs (79) carries a guide rib (81) which projects towards the other holding limb (79), which guide ribs (81) have longitudinal rib directions essentially corresponding to the pull-out direction (44), and the pull-out element (42) has two guide grooves (82,83) adapted to cooperate with the two guide ribs (81) for the purpose of guiding and holding the pull-out element (42).

7. A recording and/or reproducing system (1) as claimed in Claim 6,
**characterized in that** the coupling element (17) has two clearance grooves (84, 85) which - as soon as the coupling element (17) and the pull-out element (42) are coupled - are disposed in line with the guide grooves (82,83) of the pull-out element (42) substantially parallel to the pull-out direction (44).

8. A recording and/or reproducing system (1) as claimed in Claim 6,
**characterized in that** the two guide grooves (82,83) of the pull-out element (42) are each bounded by a bounding wall (86,87) at their ends nearer the pull-out tape (41), which bounding walls (86,87) extend transversely to the pull-out direction (44) and by means of which bounding walls (86,87) the travel of the pull-out element (42) in a direction opposite to the pull-out direction (44) can be limited.

9. A recording and/or reproducing system (1) as claimed in Claim 5,
**characterized in that** a movable latching element (88) is connected to the carrier lever (77) of the holding means (43), which latching element (88) is movable from a latching position into a release position with the aid of a cassette (3) during said relative movement, the pull-out element (42) comprises latching means (93) adapted to cooperate with the latching element (88) of the holding means (43) and, when the latching element (88) is in its latching position, the pull-out element (42) when in its standby position, is locked against a movement in the pull-out direction (44) with the aid of the latching element (88) of the holding means (43) and the latching means (93) of the pull-out element (42).

10. A recording and/or reproducing system (1) as claimed in Claim 9,
**characterized in that** the latching element (88) of the holding means (43) is formed by a wire spring having an offset portion and the latching means (93) of the pull-out element (42) are constituted by a recess formed in the pull-out element (42).

11. A recording and/or reproducing system (1) as claimed in Claim 5,
**characterized in that** a holding limb (79) of the U-shaped holding element (78) carries an actuating projection (99), which projects from the holding limb (79) substantially in a direction opposite to the pull-out direction (44), by means of which actuating projection (99) the coupling element (17) disposed in the inserted cassette (3) is movable to the positioning means (18) for the coupling element (17).

12. A recording and/or reproducing system (1) as claimed in Claim 1, **characterized in that** the coupling element (17) and the pull-out element (42) - once these two elements (17,42) have been coupled - form an assembly (103) of circularly segment-shaped cross-section, which assembly (103) is engageable in a recess (104) of a corresponding segment shaped cross-section formed in the reel hub (39) of the take-up reel (38) of the recording and/or reproducing device (2).

13. A recording and/or reproducing system (1) as claimed in Claim 12,
**characterized in that** a positioning wedge (105) which engages the recess (104) in the reel hub (39) of the take-up reel (38) is attached to the reel hub (39), and either the coupling element (17) or the pull-out element (42) has a positioning recess (106), in which positioning recess (106) the positioning wedge (105) is inserted - while the assembly (103) has engaged the recess (104) - in order to position the assembly (103) on the reel hub (39) of the take-up reel (38).

14. A recording and/or reproducing device (2) adapted to receive a cassette (3), which cassette (3) comprises a rectangular parallelepiped housing (4) having two mutually parallel main walls (7, 8) and accommodates a magnetic tape (13), and in which device (2) a tape transport path (29) for a magnetic tape (13) has been defined, which tape transport path (29) extends from a compartment (30) for receiving an inserted cassette (3), via a magnetic head (33) for scanning a magnetic tape (13), to a rotationally drivable take-up reel (38) for taking up a magnetic tape (13) and having a reel hub (39) to which a pull-out tape (41) is connected at its end nearest the take-up reel (38), which pull-out tape (41) can be guided along the tape transport path (29), and is connected to a pull-out element (42) at its other end which is remote from the take-up reel (38), which pull-out element (42) can be held in a standby position with the aid of holding means (43) and is adapted to be coupled to a coupling element (17) of an inserted cassette (3), so as to pull such a coupling element (17) and a magnetic tape (13) out of an inserted cassette (3) in a pull-out direction (44) and up to the take-up reel (38) along the tape transport path (29) after such coupling in that the take-up reel (38) is rotationally driven - by means of the take-up reel (38), the pull-out tape (41), the pull-out element (42) and a coupling element (17) coupled to the pull-out element (42), **characterized in that** actuating means (45) have been provided which are capable of producing a relative movement - in a direction (46) of movement oriented transversely to the main walls (7, 8) of a cassette (3) - between a cassette (3) and the pull-out element (17) of the recording and/or reproducing device (2), which pull-out element (17) is held in its standby position with the aid of the holding means (43), during an insertion process of the cassette (3), at least towards the end of the insertion process, and the pull-out element (42) of the recording and/or reproducing devic (2) comprises coupling means (70) which are adapted to automatically establish a coupling, without any additional means being required, during said relative movement in which the pull-out element (42) is held in its standby position with the aid of the holding means (43).

15. A recording and/or reproducing device (2) as claimed in Claim 14,
**characterized in that** the coupling means (72) of the pull-out element (42) are formed by a coupling hole (72) which extends parallel to said direction (46) of movement and, consequently, transversely to the mains walls (7, 8) of the cassette (3), which coupling hole (72) is engageable by a coupling pin (71) of a coupling element (17) of a cassette (3) inserted into the recording and/or reproducing device (2) during said relative movement.

16. A recording and/or reproducing device (2) as claimed in Claim 15,
**characterized in that** in the coupling hole (72) of the pull-out element (42) a spring-loaded latching element (75) is disposed, which latching element (75) is engageable behind a thickened distal portion (74) of a coupling pin (71) of a coupling element (17) of a cassette (3), which coupling pin (71) is engageable in the coupling hole (72).

17. A recording and/or reproducing device (2) as claimed in Claim 14,
**characterized in that** the holding means (43) for the pull-out element (42) comprise a carrier lever (77) which is pivotable about a pivot (76) which extends parallel to the direction (46) of said relative movement, which carrier lever (77) is connected to a substantially U-shaped holding element (78), which comprises two holding limbs (79), which extend transversely to the pivot (76), and a connecting limb (80), which interconnects the two holding limbs (79) and which extends parallel to the pivot (76), and by means of the two holding limbs (79) the pull-out element (42) can be held in its standby position.

18. A recording and/or reproducing device (2) as claimed in Claim 17, **characterized in that** each of the two holding limbs (79) carries a guide rib (81) which projects towards the other holding limb (79), which guide ribs (81) have longitudinal rib directions essentially corresponding to the pull-out direction (44) and the pull-out element (42) has two guide grooves (82,83) adapted to cooperate with the two guide ribs (81) for the purpose of guiding and holding the pull-out element (42).

19. A recording and/or reproducing device (2) as claimed in Claim 18,
**characterized in that** the two guide grooves (82,83) of the pull-out element (42) are each bounded by a bounding wall (86,87) at their ends nearer the pull-out tape (41), which bounding walls (86,87) extend transversely to the pull-out direction (44) and by means of which bounding walls (86,87) the travel of the pull-out element (42) in a direction opposite to the pull-out direction (44) can be limited.

20. A recording and/or reproducing device (2) as claimed in Claim 17,
**characterized in that** a movable latching element (88) is connected to the carrier lever (77) of the holding means (43), which latching element (88) is movable from a latching position into a release position with the aid of a cassette (3) during said relative movement, the pull-out element (42) comprises latching means (93) adapted to cooperate with the latching element (88) of the holding means (43) and, when the latching element (88) is in its latching position, the pull-out element (42), when in its standby position, is locked against a movement in the pull-out direction (44) wiht the aid of the latching element (88) of the holding means (43) and the latching means (93) of the pull-out element (42).

21. A recording and/or reproducing device (2) as claimed in Claim 20,
**characterized in that** the latching element (88) of the holding means (43) is formed by a wire spring having an offset portion and the latching means (93) of the pull-out element (42) are constituted by a recess formed in the pull-out element (42).

22. A recording and/or reproducing device (2) as claimed in Claim 17,
**characterized in that** a holding limb (79) of the U-shaped holding element (78) carries an actuating projection (99), which projects from the holding limb (79) substantially in a direction opposite to the pull-out direction (44), by means of which actuating projection (99) a coupling element (17) disposed in an inserted cassette (3) is movable to the positioning for the coupling element (17).

23. A recording and/or reproducing device (2) as claimed in Claim 14,
**characterized in that** during coupling to a coupling element (17) of a cassette (3) the pull-out element (42) can form an assembly (103) of circularly segment-shaped cross-section with this coupling element (17) and the reel hub (39) of the take-up reel (38) has a recess (104) of a corresponding segment-shaped cross-section in which the assembly (103) is engageable.

24. A recording and/or reproducing device (2) as claimed in Claim 23,
**characterized in that** a positioning wedge (105) which engages the recess (104) in the reel hub (39) of the take-up reel (38) is attached to the reel hub (39), and either the pull-out element (42) or the coupling element (17) which can be coupled to the pull-out element (42) has a positioning recess (106), in which positioning recess (106) the positioning wedge (105) is inserted - while the assembly (103) has engaged the recess (104) - in order to position the assembly (103) on the reel the reel hub (39) of the take-up reel (38).

25. A cassette (3), which comprises a rectangular parallelepiped housing (4) having two mutually parallel main walls (7, 8) and which accommodates a magnetic tape (13), and which comprises a supply reel (15) for storing the magnetic tape (13), which supply reel (15) has a reel hub (16) to which the magnetic tape (13) is connected at one end, and further comprises a coupling element (17), to which the magnetic tape (13) is connected at its other end and which can be positioned into a coupling position in the cassette (3) with the aid of positioning means (18), wherein the coupling element (17) of the cassette (3) comprises coupling means (71) which are adapted to automatically establish, without any additional means being required, a coupling to coupling means (72) of a pull-out element (42) of a recording and/or reproducing device (2) during a relative movement - which occurs between the cassette (3) and a pull-out element (42) of the recording and/or reproducing device (2) in a direction (46) of movement transverse to the main walls (7, 8) of the cassette (3), at least towards the end of the insertion of the cassette (3) into a recording and/or reproducing device (2) when the cassette (3) inserted in order to put the cassette (3) into operation -, during which relative movement the coupling element (17) of the cassette (3) is positioned in its coupling position with the aid of the positioning means (18), **characterized in that** the coupling means (71) of the coupling element (17) of the cassette (3) are formed by a coupling pin (71) which projects from the coupling element (17) transversely to the mains walls (7, 8) of the cassette (3) and which is engageable in a coupling hole (72) in such a pull-out element (42) of a recording and/or reproducing device (2).

26. A cassette (3) as claimed in Claim 26, **characterized in that** the coupling pin (71) has a distal portion (74) thicker than its proximal portion (73) which adjoins the coupling element (17), which distal portion (74) is adapted to engage with a spring-loaded latching element (75) disposed in the coupling hole (72) of such a pull-out element (42) of a recording and/or reproducing device (2).

27. A cassette (3) as claimed in Claim 25, **characterized in that** the coupling element (17) has two clearance grooves (84,85) which extend substantially parallel to the pull-out direction (44) and which, when the coupling element (17) is coupled to a pull-out element (42), can be brought into substantial alignment with guide grooves (82,83) formed in such a pull-out element (42) in line with the pull-out direction (44).

## Patentansprüche

1. Aufzeichnungs- und/oder Wiedergabesystem (1) mit einer Aufzeichnungsund/oder Wiedergabeeinrichtung (2) und einer Kassette (3), die dazu vorgesehen ist, in die Aufzeichnungs- und/oder Wiedergabeeinrichtung eingeführt zu werden, wobei diese Kassette (3) ein quaderförmiges Gehäuse (4) aufweist mit zwei zueinander parallelen Hauptwänden (7, 8), das einem Magnetband (13) Unterkunft bietet und wobei die Kassette (3) eine Speicherspule (15) aufweist zum Speichern des Magnetbandes (13), wobei diese Spule (15) eine Nabe (16) aufweist, mit der das Magnetband (13) an einem Ende desselben befestigt ist, und weiterhin ein Kupplungselement (17) aufweist, mit dem das Magnetband (13) an dem anderen Ende verbunden ist und das mit Hilfe von Positionierungsmitteln (18) in eine Kupplungslage in der Kassette (3) positioniert werden kann, und wobei eine Bandtransportstrecke (29) in der Aufzeichnungs- und/oder Wiedergabeeinrichtung (2) definiert worden ist, wobei diese Bandtransportstrecke (29) sich von einem Abteil (30) zum Empfangen der eingegebenen Kassette (3) über einen Magnetkopf (33) zum Abtasten des Magnetbandes (13) und vorgesehen in der Aufzeichnungs- und/oder Wiedergabeeinrichtung (2), zu einer drehbar antreibbaren Aufwickelspule (38) erstreckt zum Aufwickeln des Magnetbandes (13) und vorgesehen in der Aufzeichnungs- und/oder5 Wiedergabeeinrichtung (2), wobei diese Aufwickelspule (38) eine Spulennabe (39) aufweist, mit der ein heraus gezogenes Band (41) mit dem Ende verbunden ist, das der Aufwickelspule (38) am nächsten liegt, wobei dieses heraus gezogenes Band (41) an dem anderen Ende, das weiter von der Aufwickelspule (38) entfernt liegt, an der Bandtransportstrecke (29) entlang einem Ausziehelement (42) zugeführt wird, wobei dieses Ausziehelement (42) mit Hilfe von Haltemitteln (43), vorgesehen in der Aufzeichnungs- und/oder Wiedergabeeinrichtung (2), in einer Bereitschaftslage gehalten werden kann, und in der Bereitschaftslage mit dem Kupplungselement (17) der eingegebenen Kassette (3) in der Kupplungslage des Kupplungselementes (17) gekuppelt werden kann, und zwar derart, dass das Kupplungselement (17) und das Magnetband (13) aus der eingegebenen Kassette (3) in einer Ausziehrichtung (44) herausgezogen werden kann und über die Bandtransportstrecke (29) dadurch zu der Aufwikkelspule (38) gezogen werden kann, dass die Aufwickelspule (38) drehbar angetrieben wird, und zwar mit Hilfe der Aufwickelhaspel (38), des herausgezogenen Bandes (41), des Ausziehelementes (42) und des Kupplungselementes (17) der eingegebenen Kassette (3), wobei dieses Kupplungselement (17) mit dem Ausziehelement (42) gekuppelt worden ist, **dadurch gekennzeichnet, dass** die Aufzeichnungs- und/oder Wiedergabeeinrichtung (2) Betätigungsmittel (45) aufweist, die imstande sind, eine relative Verlagerung zu erzeugen - in einer Bewegungsrichtung (46) quer zu den Hauptwänden (7, 8) der Kassette (3) - zwischen der Kassette (3) und dem Ausziehelement (42) der Aufzeichnungs- und/oder Wiedergabeeinrichtung (2), wobei dieses Ausziehelement (42) während eines Einführungsvorgangs der Kassette (3) wenigstens gegen Ende des Einführungsvorgangs, mit Hilfe der Haltemittel (43) in der Bereitschaftslage gehalten wird, und das Kupplungselement (17) der Kassette (3) und das Ausziehelement (42) der Aufzeichnungs- und/oder Wiedergabeeinrichtung (2) Kupplungsmittel (70) aufweisen, dies dazu vorgesehen sind, automatisch eine Kupplung zu schaffen, ohne dass dazu zusätzliche Mittel erforderlich sind, wobei während der genannten relativen Verlagerung, wobei das Kupplungselement (17) der Kassette (3) mit Hilfe der Positionierungsmittel (18) in die Kupplungslage gebracht wird, und wobei das Ausziehelement (42) der Aufzeichnungs- und/oder Wiedergabeeinrichtung (2) mit Hilfe der Haltemittel (43) in der Bereitschaftslage gehalten wird.

2. Aufzeichnungs- und/oder Wiedergabesystem (1) nach Anspruch 1, **dadurch gekennzeichnet, dass** die Kupplungsmittel (70) des Kupplungselementes (77) und des Ausziehelementes (42) durch einen Kupplungsstift (71) gebildet wird, der mit dem einen Element (17) der genannten zwei Elemente (17, 42) verbunden ist und sich von diesem Element (17) parallel zu der genannten Bewegungsrichtung (46) und folglich quer zu den Hauptwänden (7, 8) der Kassette (3) erstreckt, sowie durch eine Kupplungsöffnung (72) gebildet wird, die in dem anderen Element (42) der genannten zwei Elemente (17, 42) vorgesehen ist und sich parallel zu der genannten Bewegungsrichtung (46) und folglich quer zu den Hauptwänden (7, 8) der Kassette (3) erstreckt, wobei der Kupplungsstift (71) während der genannten relativen Verlagerung mit der Kupplungsöffnung (72) zusammenarbeiten kann.

3. Aufzeichnungs- und/oder Wiedergabesystem (1) nach Anspruch 2, **dadurch gekennzeichnet, dass** der Kupplungsstift (71) mit dem Kupplungselement (77) der Kassette (3) verbunden ist und die Kupplungsöffnung (72) in dem Ausziehelement (42) der Aufzeichnungs- und/oder Wiedergabeeinrichtung (2) vorgesehen ist.

4. Aufzeichnungs- und/oder Wiedergabesystem (1) nach Anspruch 3, **dadurch gekennzeichnet, dass** der Kupplungsstift (71) einen entfernt liegenden Teil (73) aufweist, der dicker ist als der nahe liegende Teil (74), der an das Kupplungselement (17) grenzt, und dass in der Kupplungsöffnung (72) des Ausziehelementes (42) ein federbelastetes Verriegelungselement (75) vorgesehen ist, das den fern liegenden Teil (74) der Kupplungsstiftes (71) hintergreift, wenn der Kupplungsstift (71) mit der Kupplungsöffnung (72) zusammenarbeitet.

5. Aufzeichnungs- und/oder Wiedergabesystem (1) nach Anspruch 1, **dadurch gekennzeichnet, dass** die Haltemittel (43), vorgesehen für das Ausziehelement (42) in der Aufzeichnungs- und/oder Wiedergabeeinrichtung (2) einen Trägerhebel (77) aufweist, der um eine Schwenkachse (76) schwenkbar ist, die sich parallel zu der Richtung (46) der genannten relativen Bewegung erstreckt, wobei dieser Trägerhebel (77) mit einem im Wesentlichen U-förmigen Halteelement (78) verbunden ist, das zwei Halteschenkel (79) aufweist, die sich quer zu der Schwenkachse (76) erstrecken, und einen Verbindungsschenkel (80), der die zwei Halteschenkel (79) miteinander verbindet, und der sich parallel zu der Schwenkachse (76) erstreckt und mit Hilfe der beiden Halteschenkel (79) das Ausziehelement (42) in der Bereitschaftslage halten kann.

6. Aufzeichnungs- und/oder Wiedergabesystem (1) nach Anspruch 5, **dadurch gekennzeichnet, dass** mit jedem der beiden Halteschenkel (79) eine in Richtung zu dem anderen Halteschenkel (79) hin abstehende Führungsleiste (81) verbunden ist, deren Leistenlängsrichtung im wesentlichen der Ausziehrichtung (44) entspricht, und dass der Ausziehteil (42) zwei Führungsnuten (82, 83) aufweist, die zum Zusammenwirken mit den beiden Führungsleisten (81) zwecks Führen und Halten des Ausziehteiles (42) vorgesehen sind.

7. Aufzeichnungs- und/oder Wiedergabesystem (1) nach Anspruch 6, **dadurch gekennzeichnet, dass** der Kupplungsteil (17) zwei Freistellungsnuten (84, 85) aufweist, die - sobald der Kupplungsteil (17) und der Ausziehteil (42) in Kupplungsverbindung stehen - mit den Führungsnuten (82, 83) des Ausziehteiles (42) im wesentlichen parallel zu der Ausziehrichtung (44) fluchten.

8. Aufzeichnungs- und/oder Wiedergabesystem (1) nach Anspruch 6, **dadurch gekennzeichnet, dass** die beiden Führungsnuten (82, 83) des Ausziehteiles (42) in ihrem dem Ausziehband (41) zugewandten Bereich je von einer quer zu der Ausziehrichtung verlaufenden Begrenzungswand (86, 87) des Ausziehteiles (42) begrenzt sind, mit der das Verstellen des Ausziehteiles (42) entgegen der Ausziehrichtung (44) begrenzbar ist.

9. Aufzeichnungs- und/oder Wiedergabesystem (1) nach Anspruch 5, **dadurch gekennzeichnet, dass** mit dem Trägerhebel (77) der Haltemittel (43) ein verstellbarer Sperrteil (88) verbunden ist, der bei der besagten Relativbewegung mit Hilfe einer Kassette (3) aus einer Sperrposition in eine Freigabeposition verstellbar ist, und dass der Ausziehteil (42) mit Sperrmitteln (93) zum Zusammenwirken mit dem Sperrteil (88) der Haltemittel (43) versehen ist und dass bei in seiner Sperrposition befindlichem Sperrteil (88) mit Hilfe des Sperrteiles (88) der Haltemittel (43) und der Sperrmittel (93) des Ausziehteiles (42) der Ausziehteil (42) in seiner Warteposition gegen ein Verstellen in der Ausziehrichtung gesichert ist.

10. Aufzeichnungs- und/oder Wiedergabesystem (1) nach Anspruch 9, **dadurch gekennzeichnet, dass** der Sperrteil (88) der Haltemittel (43) durch eine teilweise abgebogen ausgebildete Drahtfeder gebildet ist und dass die Sperrmittel (93) des Ausziehteiles (42) durch eine in dem Ausziehteil (42) vorgesehene Ausnehmung gebildet sind.

11. Aufzeichnungs- und/oder Wiedergabesystem (1) nach Anspruch 5, **dadurch gekennzeichnet, dass** mit einem Halteschenkel (79) des U-förmigen Halteteiles (78) ein im wesentlichen entgegen der Ausziehrichtung (44) von dem Halteschenkel (79) abstehender Verstellfortsatz (99) verbunden ist, mit dem der in der eingesetzten Kassette (3) befindliche Kupplungsteil (17) an die Positioniermittel (18) für den Kupplungsteil (17) anlegbar ist.

12. Aufzeichnungs- und/oder Wiedergabesystem (1) nach Anspruch 1, **dadurch gekennzeichnet, dass** der Kupplungsteil (17) und der Ausziehteil (42) - sobald diese beiden Teile (17, 42) in Kupplungsverbindung stehen - eine einen kreissegmentförmigen Querschnitt aufweisende Baueinheit (103) bilden, die in eine einen korrespondierenden kreissegmentförmigen Querschnitt aufweisende Ausnehmung (104) in der Spulennabe (39) der Aufwickelspule (38) der Aufzeichnungs- und/oder Wiedergabeeinrichtung (2) aufnehmbar ist.

13. Aufzeichnungs- und/oder Wiedergabesystem (1) nach Anspruch 12, **dadurch gekennzeichnet, dass** mit der Spulennabe (39) der Aufwickelspule (38) ein in die Ausnehmung (104) in der Spulennabe (39) ragender Positionierkeil (105) verbunden ist und dass von dem Kupplungsteil (17) und dem Ausziehteil (42) einer dieser beiden Teile eine Positionierausnehmung (106) aufweist, in die - bei in die Ausnehmung (104) aufgenommener Baueinheit (103) - der Positionierkeil (105) zwecks Positionierung der Baueinheit (103) an der Spulennabe (39) der Aurwickelspule (38) eingeführt ist.

14. Aufzeichnungs- und/oder Wiedergabeeinrichtung (2), in die eine Kassette (3) einsetzbar ist, die ein quaderförmiges Gehäuse (4) mit zwei parallel zueinander verlaufenden Hauptwänden (7, 8) aufweist und in der ein Magnetband (13) untergebracht ist, und in der ein Bandlaufpfad (29) für ein Magnetband (13) festgelegt ist, der von einem Raum (30) zum Aufnehmen einer eingesetzten Kassette (3) über einen Magnetkopf (33) zum Abtasten eines Magnetbandes (13) bis zu einer zum Aufwickeln eines Magnetbandes (13) vorgesehenen, rotierend antreibbaren Aufwickelspule (38) verläuft, mit deren Spulennabe (39) ein Ausziehband (41) im Bereich seines der Aufwickelspule (38) zugewandten einen Endes verbunden ist, das entlang des Bandlaufpfades (29) führbar ist und das im Bereich seines von der Aufwickelspule (38) abgewandten anderen Endes mit einem Ausziehteil (42) verbunden ist, der mit Hilfe von Haltemitteln (43) in einer Warteposition haltbar ist und der zum Kuppeln mit einem Kupplungsteil (17) einer eingesetzten Kassette (3) vorgesehen ist, um nach einem solchen Kuppeln durch rotierendes Antreiben der Aufwickelspule (38) - mit Hilfe der Aufwickelspule (38), des Ausziehbandes (41), des Ausziehteiles (42) und eines mit dem Ausziehteil (42) gekuppelten Kupplungsteiles (17) - einen solchen Kupplungsteil (17) und ein Magnetband (13) in einer Ausziehrichtung aus einer eingesetzten Kassette (3) herauszuziehen und entlang des Bandlaufpfades (29) bis zu der Aufwickelspule (38) hin zu ziehen, **dadurch gekennzeichnet, dass** Verstellmittel (45) vorgesehen sind, mit denen bei einem Einsetzvorgang einer Kassette (3) in die Aufzeichnungsund/oder Wiedergabeeinrichtung (2) zumindest gegen Endes des Einsetzvorganges zwischen einer Kassette (3) und dem mit Hilfe der Haltemittel (43) in seiner Warteposition gehaltenen Ausziehteil (42) der Aufzeichnungs- und/oder Wiedergabeeinrichtung (2) eine - in einer quer zu den Hauptwänden einer Kassette verlaufenden Bewegungsrichtung ablaufende - Relativbewegung bewirkbar ist, und dass der Ausziehteil der Aufzeichnungs- und/oder Wiedergabeeinrichtung (2) Kupplungsmittel (70) aufweist, die bei der besagten Relativbewegung, bei der der Ausziehteil (42) mit Hilfe der Haltemittel (43) in seiner Warteposition gehalten ist, ohne das Erfordernis zusätzlicher Mittel selbsttätig in eine Kupplungsverbindung mit Kupplungsmitteln eines Kupplungsteiles einer in die Aufzeichnungs- und/oder Wiedergabeeinrichtung (2) eingesetzten Kassette (3) bringbar sind.

15. Aufzeichnungs- und/oder Wiedergabeeinrichtung (2) nach Anspruch 14, **dadurch gekennzeichnet, dass** die Kupplungsmittel (72) des Ausziehteiles (42) durch ein parallel zu der besagten Bewegungsrichtung (46) verlaufendes Kupplungsloch (72) gebildet sind, in das ein Kupplungsstift (71) eines Kupplungsteiles (17) einer in die Aufzeichnungs- und/oder Wiedergabeeinrichtung (2) eingesetzten Kassette (3) bei der besagten Relativbewegung einführbar ist.

16. Aufzeichnungs- und/oder Wiedergabeeinrichtung (2) nach Anspruch 15, **dadurch gekennzeichnet, dass** in dem Kupplungsloch (72) des Ausziehteiles (42) ein mit Federkraft belasteter Rastteil (75) vorgesehen ist, mit dem ein verdickt ausgebildeter Kopfbereich (74) eines in das Kupplungsloch (72) einführbaren Kupplungsstiftes (71) eines Kupplungsteiles (17) einer Kassette (3) hintergreifbar ist.

17. Aufzeichnungs- und/oder Wiedergabeeinrichtung (2) nach Anspruch 14, **dadurch gekennzeichnet, dass** die Haltemittel (43) für den Ausziehteil (42) einen um eine parallel zu der Bewegungsrichtung (46) der besagten Relativbewegung verlaufende Schwenkachse (76) verschwenkbaren Trägerhebel (77) aufweisen, mit dem ein im wesentlichen U-förmiger Halteteil (78) verbunden ist, der zwei quer zu der Schwenkachse (76) verlaufende Halteschenkel (79) und einen parallel zu der Schwenkachse (76) verlaufenden Steg (80) zum Verbinden der beiden Halteschenkel (79) aufweist, und dass mit Hilfe der beiden Halteschenkel (79) der Ausziehteil (42) in seiner Warteposition haltbar ist.

18. Aufzeichnungs- und/oder Wiedergabeeinrichtung (2) nach Anspruch 17, **dadurch gekennzeichnet, dass** mit jedem der beiden Halteschenkel (79) eine in Richtung zu dem anderen Halteschenkel (79) hin abstehende Führungsleiste (81) verbunden ist, deren Leistenlängsrichtung im wesentlichen der Ausziehrichtung (44) entspricht, und dass der Ausziehteil (42) zwei Führungsnuten (82, 83) aufweist, die zum Zusammenwirken mit den beiden Führungsleisten (81) zwecks Führen und Halten des Ausziehteiles (42) vorgesehen sind.

19. Aufzeichnungs- und/oder Wiedergabeeinrichtung (2) nach Anspruch 18, **dadurch gekennzeichnet, dass** die beiden Führungsnuten (82, 83) des Ausziehteiles (42) in ihrem dem Ausziehband (41) zugewandten Bereich je von einer quer zu der Ausziehrichtung (44) verlaufenden Begrenzungswand (86, 87) des Ausziehteiles (42) begrenzt sind, mit der das Verstellen des Ausziehteiles (42) entgegen der Ausziehrichtung (44) begrenzbar ist.

20. Aufzeichnungs- und/oder Wiedergabeeinrichtung (2) nach Anspruch 17, **dadurch gekennzeichnet, dass** mit dem Trägerhebel (77) der Haltemittel (43) ein verstellbarer Sperrteil (88) verbunden ist, der bei der besagten Relativbewegung mit Hilfe einer Kassette (3) aus einer Sperrposition in eine Freigabeposition verstellbar ist, und dass der Ausziehteil (42) mit Sperrmitteln (93) zum Zusammenwirken mit dem Sperrteil (88) der Haltemittel (43) versehen ist und dass bei in seiner Sperrposition befindlichem Sperrteil (88) mit Hilfe des Sperrteiles (88) der Haltemittel (43) und der Sperrmittel (93) des Ausziehteiles (42) der Ausziehteil (42) in seiner Warteposition gegen ein Verstellen in der Ausziehrichtung (44) gesichert ist.

21. Aufzeichnungs- und/oder Wiedergabeeinrichtung (2) nach Anspruch 20, **dadurch gekennzeichnet, dass** der Sperrteil (88) der Haltemittel (43) durch eine teilweise abgebogen ausgebildete Drahtfeder gebildet ist und dass die Sperrmittel (93) des Ausziehteiles (42) durch eine in dem Ausziehteil (42) vorgesehene Ausnehmung gebildet sind.

22. Aufzeichnungs- und/oder Wiedergabeeinrichtung (2) nach Anspruch 17, **dadurch gekennzeichnet, dass** mit einem Halteschenkel (79) des U-förmigen Halteteiles (78) ein im wesentlichen entgegen der Ausziehrichtung (44) von dem Halteschenkel (79) abstehender Verstellfortsatz (99) verbunden ist, mit dem ein in einer eingesetzten Kassette (3) befindlicher Kupplungsteil (17) an die Positioniermittel (18) für den Kupplungsteil (17) anlegbar ist.

23. Aufzeichnungs- und/oder Wiedergabeeinrichtung (2) nach Anspruch 14, **dadurch gekennzeichnet, dass** der Ausziehteil (42) beim Kuppeln mit einem Kupplungsteil (17) einer Kassette (3) mit diesem Kupplungsteil (17) zu einer einen kreissegmentförmigen Querschnitt aufweisenden Baueinheit (103) zusammensetzbar ist und dass die Spulennabe (39) der Aurwickelspule (38) eine einen korrespondierenden kreissegmentförmigen Querschnitt aufweisende Ausnehmung (104) aufweist, in die die Baueinheit (103) aufnehmbar ist.

24. Aufzeichnungs- und/oder Wiedergabeeinrichtung (2) nach Anspruch 23, **dadurch gekennzeichnet, dass** mit der Spulennabe (39) der Aufwickelspule (38) ein in die Ausnehmung (104) in der Spulennabe (39) ragender Positionierkeil (105) verbunden ist und dass von dem Ausziehteil (42) und dem mit dem Ausziehteil (42) kuppelbaren Kopplungsteil (17) einer dieser beiden Teile eine Positionierausnehmung (106) aufweist, in die - bei in die Ausnehmung (106) aufgenommener Baueinheit - der Positionierkeil (105) zwecks Positionierung der Baueinheit (103) an der Spulennabe (39) der Aufwickelspule (38) eingeführt ist.

25. Kassette (3), die ein quaderförmiges Gehäuse (4) mit zwei zueinander parallel verlaufenden Hauptwänden (7, 8) aufweist und in der ein Magnetband (13) untergebracht ist und die eine zum Speichern des Magnetbandes (13) vorgesehene Speicherspule (15) enthält, mit deren Spulennabe (16) das Magnetband (13) im Bereich seines einen Endes verbunden ist, und die weiters einen Kupplungsteil (17) enthält, mit dem das Magnetband (13) im Bereich seines anderen Endes verbunden ist und der in der Kassette (3) mit Hilfe von Positioniermitteln (18) in einer Kupplungsposition positionierbar ist, wobei der Kupplungsteil (17) der Kassette (3) Kupplungsmittel (71) aufweist, die bei einer - bei einem Einsetzvorgang der Kassette (3) in eine Aufzeichnungs- und/oder Wiedergabeeinrichtung (2) zum Betreiben der Kassette (3) zumindest gegen Ende des Einsetzvorganges zwischen der Kassette (3) und einem Ausziehteil (42) der Aufzeichnungs- und/oder Wiedergabeeinrichtung (2) in einer quer zu den Hauptwänden (7, 8) der Kassette (3) verlaufenden Bewegungsrichtung (46) ablaufenden - Relativbewegung, bei der der Kupplungsteil (17) der Kassette (3) mit Hilfe der Positioniermittel (18) in seiner Kupplungsposition positioniert ist, ohne das Erfordernis zusätzlicher Mittel selbsttätig in eine Kupplungsverbindung mit Kopplungsmitteln (72) eines solchen Ausziehteiles (42) einer Aufzeichnungs- und/oder Wiedergabeeinrichtung (2) bringbar sind, **dadurch gekennzeichnet, dass** die Kupplungsmittel (71) des Kupplungsteiles (17) der Kassette (3) durch einen von dem Kupplungsteil (17) quer zu den Hauptwänden (7, 8) der Kassette (3) abstehenden Kupplungsstift (71) gebildet sind, der in ein Kupplungsloch (72) eines solchen Ausziehteiles (42) einer Aufzeichnungs- und/oder Wiedergabeeinrichtung (2) einführbar ist.

26. Kassette (3) nach Anspruch 26, **dadurch gekennzeichnet, dass** der Kupplungsstift (71) einen gegenüber seinem an den Kupplungsteil (17) angrenzenden Fußbereich (73) verdickt ausgebildeten Kopfbereich (74) aufweist, der zum Hintergreifen mit einem in dem Kupplungsloch (72) eines solchen Ausziehteiles (42) einer Aufzeichnungs- und/oder Wiedergabeeinrichtung (2) vorgesehenen, mit Federkraft belasteten Rastteil (75) ausgebildet ist.

27. Kassette (3) nach Anspruch 25, **dadurch gekennzeichnet, dass** der Kupplungsteil (17) zwei im wesentlichen parallel zu der Ausziehrichtung (44) verlaufende Freistellungsnuten (84, 85) aufweist, die beim Kuppeln des Kupplungsteiles (17) mit einem Ausziehteil (42) mit in einem solchen Ausziehteil (42) vorgesehenen Führungsnuten (82, 83) in eine im wesentlichen in der Ausziehrichtung (44) fluchtende Ausrichtung bringbar sind.

## Revendications

1. Système d'enregistrement et de reproduction (1) comprenant un dispositif d'enregistrement et/ou de reproduction (2) et une cassette (3) propre à être insérée dans le dispositif d'enregistrement et/ou de reproduction (2), laquelle cassette (3) comprend un boîtier (4) en forme de parallélépipède rectangle comportant deux parois principales (7,8) mutuellement parallèles, boîtier (4) dans lequel une bande magnétique (13) est logée, et dans lequel la cassette (3) renferme une bobine débitrice (15) pour stocker la bande magnétique (13), laquelle bobine débitrice (15) présente un moyeu de bobine (16) auquel la bande magnétique (13) est reliée à une extrémité, et renferme en outre un élément de raccordement (17), auquel la bande magnétique (13) est reliée, à son autre extrémité, et qui peut être positionné dans une position de raccordement dans la cassette (3) à l'aide de moyens de positionnement (18), et dans lequel un trajet de transport de bande (29) a été défini dans le dispositif d'enregistrement et/ou de reproduction (2), lequel trajet de transport de bande (29) part d'un compartiment (30) destiné à recevoir la cassette (3) insérée, passe par une tête magnétique (33) destinée à balayer la bande magnétique (13) et prévue dans le dispositif d'enregistrement et/ou de reproduction (2), pour aboutir à une bobine réceptrice (38) pouvant être entraînée en rotation pour envider la bande magnétique (13) et prévue dans le dispositif d'enregistrement et/ou de reproduction (2), laquelle bobine réceptrice (38) présente un moyeu de bobine (16) auquel une bande d'extraction (41) est reliée à son extrémité la plus proche de la bobine réceptrice (38), laquelle bobine d'extraction peut être guidée le long du trajet de transport de bande (29) et est reliée à un élément d'extraction (42), à son autre extrémité qui est éloignée de la bobine réceptrice (38), lequel élément d'extraction (42) peut être maintenu en position d'attente à l'aide du moyen de maintien (43) prévu dans le dispositif d'enregistrement et/ou de reproduction (2) et, en position d'attente, peut être raccordé à l'élément de raccordement (17) de la cassette (3) insérée dans la position de raccordement dudit élément de raccordement (17), d'une manière telle que l'élément de raccordement (17) et la bande magnétique (13) puissent être extraits de la cassette (3) insérée dans un sens d'extraction et puissent être tirés vers la bobine réceptrice (38) le long du trajet de transport de bande (29) par le fait que la bobine réceptrice (38) est entraînée en rotation, au moyen de la bobine réceptrice (38), de la bande d'extraction (41), de l'élément d'extraction (42) et de l'élément de raccordement (17) de la cassette (3) insérée, lequel élément de raccordement (17) a été raccordé à l'élément d'extraction (42),
**caractérisé en ce que** le dispositif d'enregistrement et/ou de reproduction (2) (2) comprend un moyen d'actionnement pouvant produire un déplacement relatif, dans une direction de déplacement orientée transversalement aux parois (7,8) principales de la cassette (3), entre la cassette (3) et l'élément d'extraction (42) du dispositif d'enregistrement et/ou de reproduction (2), lequel élément d'extraction (42) est maintenu dans sa position d'attente à l'aide du moyen de maintien (43), pendant un processus d'insertion de la cassette (3), au moins vers la fin du processus d'insertion, et l'élément de raccordement (17) de la cassette (3) et l'élément d'extraction (42) du dispositif d'enregistrement et/ou de reproduction (2) comprennent des moyens de raccordement (70) qui sont propres à établir automatiquement un raccordement sans que des moyens supplémentaires ne soient requis, pendant ledit déplacement relatif dans lequel l'élément de raccordement (17) de la cassette (3) est positionné dans sa position de raccordement à l'aide des moyens de positionnement (18) et l'élément d'extraction (42) du dispositif d'enregistrement et/ou de reproduction (2) est maintenu dans sa position d'attente à l'aide du moyen de maintien (43).

2. Système d'enregistrement et/ou de reproduction (1) suivant la revendication 1, **caractérisé en ce que** les moyens de raccordement (70) de l'élément de raccordement (17) et de l'élément d'extraction (42) sont formés par une broche de raccordement (71) qui est reliée à un élément (17) desdits deux éléments (17, 42) et qui fait saillie à partir de cet élément (17) parallèlement à ladite direction (46) de déplacement et, en conséquence, transversalement aux parois principales (7, 8) de la cassette (3), et par un trou de raccordement (72), qui est ménagé dans l'autre élément (42) desdits deux éléments (17, 42) et s'étend parallèlement à ladite direction de déplacement (46) et, en conséquence, transversalement aux parois principales (7, 8) de la cassette (3), la broche de raccordement (71) pouvant être engagée en prise dans le trou de raccordement (72) pendant ledit déplacement relatif.

3. Système d'enregistrement et/ou de reproduction (1) suivant la revendication 2, **caractérisé en ce que** la broche de raccordement (71) est reliée à l'élément de raccordement (17) de la cassette (3) et le trou de raccordement (72) est formé dans l'élément d'extraction (42) du dispositif d'enregistrement et/ou de reproduction (2).

4. Système d'enregistrement et/ou de reproduction (1) suivant la revendication 3, **caractérisé en ce que** la broche de raccordement (71) a une partie distale (73) plus épaisse que sa partie proximale (74) qui jouxte l'élément de raccordement (17), et dans le trou de raccordement (72) de l'élément d'extraction (42) est disposé un élément de verrouillage à ressort (75), qui s'engage derrière la partie distale (74) de la broche de raccordement (71) lorsque la broche de raccordement (71) s'est engagée dans le trou de raccordement (72).

5. Système d'enregistrement et/ou de reproduction (1) suivant la revendication 1, **caractérisé en ce que** le moyen de maintien (43) prévu pour l'élément d'extraction (42) dans le dispositif d'enregistrement et/ou de reproduction (2) comprend un levier porteur (77) qui peut pivoter autour d'un pivot (76) qui s'étend parallèlement à la direction (46) dudit déplacement relatif, lequel levier porteur (77) est relié à un élément de maintien (78) essentiellement en U, qui comprend deux ailes de maintien (79) qui s'étendent transversalement au pivot (76) et une âme de liaison (80) qui relie les deux ailes de maintien (79) l'une à l'autre et qui s'étend parallèlement au pivot (76) et, grâce aux deux ailes de maintien (79), l'élément d'extraction (42) peut être maintenu dans sa position d'attente.

6. Système d'enregistrement et/ou de reproduction (1) suivant la revendication 5, **caractérisé en ce que** chacune des deux ailes de maintien (79) porte une nervure de guidage (81) qui fait saillie vers l'autre aile de maintien (79), lesquelles nervures de guidage (81) ont des directions de nervure longitudinales qui correspondent essentiellement au sens d'extraction (44) et l'élément d'extraction (42) est pourvu de deux rainures de guidage (82, 83) propres à coopérer avec les deux nervures de guidage (81) dans le but de guider et de maintenir l'élément d'extraction (42).

7. Système d'enregistrement et/ou de reproduction (1) suivant la revendication 6, **caractérisé en ce que** l'élément de raccordement (17) présente deux rainures d'aisance 84 et 85 qui, dès que l'élément de raccordement (17) et l'élément d'extraction (42) sont raccordés, sont disposés en ligne avec les rainures de guidage 82 et 83 de l'élément d'extraction 41 en substance parallèlement à la direction d'extraction 44.

8. Système d'enregistrement et/ou de reproduction (1) suivant la revendication 6, **caractérisé en ce que** les deux rainures de guidage (82, 83) de l'élément d'extraction 42 sont chacune délimitées par une paroi de délimitation (86, 87), à leurs extrémités proches de la bande d'extraction (41), lesquelles parois de délimitation (86, 87) s'étendent transversalement à la direction d'extraction (44) et, au moyen des deux parois de délimitation (86,87), le trajet de l'élément d'extraction 42 dans un sens opposé au sens d'extraction 44 peut être limité.

9. Système d'enregistrement et/ou de reproduction (1) suivant la revendication 5, **caractérisé en ce qu'**un élément de verrouillage mobile (88) est relié au levier porteur (77) du moyen de maintien (43), lequel élément de verrouillage (88) peut être déplacé d'une position de verrouillage vers une position de libération à l'aide d'une cassette (3) pendant ledit déplacement relatif, l'élément d'extraction (42) comprend un moyen de verrouillage (93) propre à coopérer avec l'élément de verrouillage (88) du moyen de maintien (43) et, lorsque l'élément de verrouillage (88) est dans sa position de verrouillage, l'élément d'extraction (42), lorsqu'il est en position d'attente, est verrouillé contre tout déplacement dans le sens d'extraction (44) à l'aide de l'élément de verrouillage (88) du moyen de maintien (43) et du moyen de verrouillage (93) de l'élément de traction (42).

10. Système d'enregistrement et/ou de reproduction (1) suivant la revendication 9, **caractérisé en ce que** l'élément de verrouillage (88) du moyen de maintien (43) est formé d'un ressort filiforme ayant une partie décalée et le moyen de verrouillage (93) de l'élément d'extraction (42) est constitué d'un creux formé dans l'élément d'extraction (42).

11. Système d'enregistrement et/ou de reproduction (1) suivant la revendication 5, **caractérisé en ce qu'**une aile de maintien (79) de l'élément de maintien (78) en U porte une saillie d'actionnement (99) qui s'étend depuis l'aile de maintien (79) essentiellement dans un sens opposé au sens d'extraction (44), saillie d'actionnement (99) au moyen de laquelle l'élément de raccordement (17) disposé dans la cassette insérée (3) peut être déplacé vers les moyens de positionnement (18) pour l'élément de raccordement (17).

12. Système d'enregistrement et/ou de reproduction (1) suivant la revendication 1, **caractérisé en ce que** l'élément de raccordement (17) et l'élément d'extraction (42), une fois que ces deux éléments (17, 42) ont été raccordés, forment un ensemble (103) de section transversale en forme de segment circulaire, lequel ensemble (103) peut être mis en prise avec un creux (103) de section transversale en forme de segment correspondante formé dans le moyeu de bobine (39) de la bobine réceptrice (38) du dispositif d'enregistrement et/ou de reproduction (2).

13. Système d'enregistrement et/ou de reproduction (1) suivant la revendication 12, **caractérisé en ce qu'**un coin de positionnement (105) qui est solidaire du creux (104) dans le moyeu de bobine (39) de la bobine réceptrice (38) est fixé au moyeu de bobine (39) et soit l'élément de raccordement (17) soit l'élément d'extraction (42) présente un creux de positionnement (106) dans lequel le coin de positionnement (105) s'insère, pendant que l'ensemble (103) se met en prise avec le creux (104), afin de positionner l'ensemble (103) sur le moyeu de bobine (39) de la bobine réceptrice (38).

14. Dispositif d'enregistrement et/ou de reproduction (2) propre à recevoir une cassette (3), laquelle cassette (3) comprend un boîtier (4) en forme de parallélépipède rectangle comportant deux parois principales (7, 8) mutuellement parallèles, boîtier (4) qui loge une bande magnétique (13) et dans lequel dispositif (2) un trajet de transport de bande (29) pour bande magnétique (13) a été défini, lequel trajet de transport de bande (29) part d'un compartiment (30) destiné à recevoir la cassette (3) insérée, passe par une tête magnétique (33) destinée à balayer une bande magnétique (13), pour aboutir à une bobine réceptrice (38) pouvant être entraînée en rotation pour envider la bande magnétique (13) et ayant un moyeu de bobine (39) à laquelle une bande d'extraction (41) est reliée à son extrémité proche de la bobine réceptrice (38), laquelle bande d'extraction peut être guidée le long du trajet de transport de bande (29) et est reliée à un élément d'extraction (42) à son autre extrémité qui est éloignée de la bobine réceptrice (38), lequel élément d'extraction (42) peut être maintenu en position d'attente à l'aide du moyen de maintien (43) et est propre à être raccordé à un élément de raccordement (17) de la cassette (3) insérée de manière à extraire un tel élément de raccordement (17) et une bande magnétique (13) de la cassette (3) insérée dans un sens (44) d'extraction et jusqu'à la bobine réceptrice (38) le long du trajet de transport de bande (29) après un tel raccordement par le fait que la bobine réceptrice (38) est entraînée en rotation, au moyen de la bobine réceptrice (38), de la bande d'extraction (41), de l'élément d'extraction (42) et d'un élément de raccordement (17) raccordé à l'élément d'extraction (42),
**caractérisé en ce qu'**un moyen d'actionnement (45) a été prévu, qui est capable de produire un déplacement relatif, dans une direction (46) de déplacement orientée transversalement aux parois principales (7, 8) d'une cassette (3), entre une cassette (3) et l'élément d'extraction (17) du dispositif d'enregistrement et/ou de reproduction (2), lequel élément d'extraction (17) est maintenu dans sa position d'attente à l'aide du moyen de maintien (43), pendant un processus d'insertion de la cassette (3), au moins vers la fin du processus d'insertion, et l'élément d'extraction (42) du dispositif d'enregistrement et/ou de reproduction (2) comprend un moyen de raccordement (70) qui est à même d'établir automatiquement unraccordement, sans que des moyens supplémentaires ne soient requis, pendant ledit déplacement relatif dans lequel l'élément de traction (42) est maintenu dans sa position d'attente à l'aide du moyen de maintien (43).

15. Dispositif d'enregistrement et/ou de reproduction (2) suivant la revendication 14, **caractérisé en ce que** le moyen de raccordement (72) de l'élément d'extraction (42) est formé par un trou de raccordement (72) qui s'étend parallèlement à ladite direction (46) de déplacement et, par conséquent, transversalement aux parois principales (7, 8) de la cassette (3), lequel trou de raccordement (72) peut recevoir une broche de raccordement (71) d'un élément de raccordement (17) d'une cassette (3) insérée dans le dispositif d'enregistrement et/ou de reproduction (2) pendant ledit déplacement relatif.

16. Dispositif d'enregistrement et/ou de reproduction (2) suivant la revendication 15, **caractérisé en ce que** dans le trou de raccordement (72) de l'élément d'extraction (42) est disposé un élément de verrouillage à ressort(75), lequel élément de verrouillage (75) peut venir en prise derrière une partie distale (74) épaissie d'une broche de raccordement (71) d'un élément de raccordement (17) d'une cassette (3), laquelle broche de raccordement (71) peut être engagée dans le trou de raccordement (72).

17. Dispositif d'enregistrement et/ou de reproduction (2) suivant la revendication 14, **caractérisé en ce que** le moyen de maintien (43) de l'élément d'extraction (42) comprend un levier porteur (77) qui peut pivoter autour d'un pivot (76) qui s'étend parallèlement à la direction (46) dudit déplacement relatif, lequel levier porteur (77) est relié à un élément de maintien (78) essentiellement en U qui comprend deux ailes de maintien (79) qui s'étendent transversalement au pivot (76) et une âme de liaison (80) qui relie l'une à l'autre les deux ailes de maintien (79) et qui s'étend parallèlement au pivot (76) et, au moyen des deux ailes de maintien (79), l'élément d'extraction (42) peut être maintenu dans sa position d'attente.

18. Dispositif d'enregistrement et/ou de reproduction (2) suivant la revendication 17, **caractérisé en ce que** chacune des deux ailes de maintien (79) porte une nervure de guidage (81) qui fait saillie vers l'autre aile de maintien (79), lesquelles nervures de guidage (81) ont des directions de nervure longitudinales qui correspondent essentiellement au sens d'extraction (44) et l'élément d'extraction (42) est pourvu de rainures sillons de guidage (82, 83) propres à coopérer avec les deux nervures de guidage (81) dans le but de guider et de maintenir l'élément d'extraction (42).

19. Dispositif d'enregistrement et/ou de reproduction (2) suivant la revendication 18, **caractérisé en ce que** les rainures sillons de guidage (82, 83) de l'élément d'extraction (42) sont chacune délimitées par une paroi de délimitation (86, 87) à leurs extrémités proches de la bande d'extraction (41), lesquelles parois de délimitation (86, 87) s'étendent transversalement au sens d'extraction (44) et au moyen desquelles parois de délimitation (86, 87) le déplacement de l'élément d'extraction (42) dans un sens opposé au sens d'extraction (44) peut être limité.

20. Dispositif d'enregistrement et/ou de reproduction (2) suivant la revendication 17, **caractérisé en ce qu'**un élément de verrouillage (88) mobile est relié au levier porteur (77) du moyen de maintien (43), lequel élément de verrouillage (88) pouvant être déplacé d'une position de verrouillage dans une position de libération à l'aide d'une cassette (3) pendant ledit déplacement relatif, l'élément d'extraction (42) comprend un moyen de verrouillage (93) propre à coopérer avec l'élément de verrouillage (88) du moyen de maintien (43) et, lorsque l'élément de verrouillage (88) est en position de verrouillage, l'élément d'extraction (42), lorsqu'il est en position d'attente, est verrouillé contre tout déplacement dans la direction d'extraction (44) à l'aide de l'élément de verrouillage (88) du moyen de maintien (43) et de l'élément de verrouillage (93) de l'élément d'extraction (42).

21. Dispositif d'enregistrement et/ou de reproduction (2) suivant la revendication 20, **caractérisé en ce que** l'élément de verrouillage (88) du moyen de maintien (43) est formé par un ressort filiforme ayant une partie décalée et le moyen de verrouillage (93) de l'élément d'extraction (42) est constitué d'un creux formé dans l'élément d'extraction (42).

22. Dispositif d'enregistrement et/ou de reproduction (2) suivant la revendication 17, **caractérisé en ce qu'**une aile de maintien (79) de l'élément de maintien en U (78) porte une saillie d'actionnement (99) qui s'étend à partir de l'aile de maintien (79) essentiellement dans un sens opposé au sens d'extraction (44), au moyen de laquelle saillie d'actionnement (99), un élément de raccordement (17) disposé dans une cassette insérée (3) peut être déplacé vers le moyen de positionnement (18) de l'élément de raccordement (17).

23. Dispositif d'enregistrement et/ou de reproduction (2) suivant la revendication 14, **caractérisé en ce que** pendant le raccordement à un élément de raccordement (17) d'une cassette (3), l'élément d'extraction (42) peut former un ensemble (103) de section transversale en forme de segment circulaire avec cet élément de raccordement (17) et le moyeu de bobine (39) de la bobine réceptrice (38) a un creux (104) d'une section en forme de segment correspondant dans laquelle l'ensemble (103) peut s'engager.

24. Dispositif d'enregistrement et/ou de reproduction (2) suivant la revendication 23, **caractérisé en ce qu'**un coin de positionnement (105) qui s'engage dans le creux (104) dans le moyeu de bobine (39) de la bobine réceptrice (38) est fixé au moyeu de bobine (39), et soit l'élément d'extraction (42), soit l'élément de raccordement (17) qui peut être raccordé à l'élément d'extraction (42), dispose d'un creux de positionnement (106), creux de positionnement (106) dans lequel s'insère le coin de positionnement (105), tandis que l'ensemble (103) s'est engagé dans le creux (104), afin de positionner l'ensemble (103) sur le moyeu de bobine (39) de la bobine réceptrice (38).

25. Cassette (3), qui comprend un boîtier (4) en forme de parallélépipède rectangle comportant deux parois principales (7, 8) mutuellement parallèles et qui loge une bande magnétique (13) et qui comprend une bobine débitrice (15) pour stocker la bande magnétique (13), laquelle bobine débitrice (15) présente un moyeu de bobine (16) auquel la bande magnétique (13) est reliée à une extrémité, et comprend en outre un élément de raccordement (17) auquel la bande magnétique (13) est reliée à son autre extrémité et qui peut être positionné en position de raccordement dans la cassette (3) à l'aide de moyens de positionnement (18), dans laquelle l'élément de raccordement (17) de la cassette (3) comprend un moyen de raccordement (72) qui est propre à établir automatiquement, sans que des moyens supplémentaires soient requis, un raccordement au moyen de raccordement(72) d'un élément d'extraction (42) d'un dispositif d'enregistrement et/ou de reproduction (2) pendant un déplacement relatif, qui se produit entre la cassette (3) et un élément d'extraction (42) du dispositif d'enregistrement et/ou de reproduction (2) dans une direction (46) de déplacement transversale par rapport aux parois principales (7, 8) de la cassette (3), au moins vers la fin de l'insertion de la cassette (3) dans le dispositif d'enregistrement et/ou de reproduction (2) lorsque la cassette (3) est insérée en vue de sa mise en fonctionnement, déplacement relatif pendant lequel l'élément de raccordement (17) de la cassette (3) est positionné dans sa position de raccordement à l'aide des moyens de positionnement (18),
**caractérisée en ce que** le moyen de raccordement (72) de l'élément de raccordement (17) est formé par une broche de raccordement (71) qui fait saillie à partir de l'élément de raccordement (17) transversalement aux parois principales (7, 8) de la cassette (3) et qui peut s'engager dans un trou de raccordement dans un tel élément d'extraction (42) d'un dispositif d'enregistrement et/ou de reproduction (2).

26. Cassette (3) suivant la revendication 26, **caractérisée en ce que** la broche de raccordement (71) présente une partie distale (74) plus épaisse que sa partie proximale (73) qui jouxte l'élément de raccordement (17), laquelle partie distale (74) est à même de s'engager en prise avec un élément de verrouillage (75) à ressort disposé dans le trou de couplage (72) d'un tel élément d'extraction (42) du dispositif d'enregistrement et/ou de reproduction (2).

27. Cassette (3) suivant la revendication 25, **caractérisée en ce que** l'élément de raccordement (17) présente deux rainures d'aisance (84, 85) qui s'étendent en substance parallèlement au sens d'extraction (44) et qui, lorsque l'élément de raccordement (17) est raccordé à un élément d'extraction (42), peuvent être amenées sensiblement en ligne avec les rainures de guidage (82, 83) ménagées dans un tel élément d'extraction (42) en ligne avec le sens d'extraction (44).
